# EUROPÄISCHE PATENTSCHRIFT

(11) **EP 4 263 713 B1**
(45) Veröffentlichungstag und Bekanntmachung des Hinweises auf die Patenterteilung: **29.05.2024**
(21) Anmeldenummer: 20842696.5
(22) Anmeldetag: 18.12.2020
(51) Int. Cl.: C08L 83/08, C08L 23/06, C08L 23/12, C08L 97/02

(54) **MISCHUNGEN ENTHALTEND OXAMIDFUNKTIONELLE SILOXANE UND ORGANISCHE FASERN**
MIXTURES CONTAINING OXAMIDE-FUNCTIONAL SILOXANES AND ORGANIC FIBERS
MÉLANGES CONTENANT DES SILOXANES À FONCTION OXAMIDE ET DES FIBRES ORGANIQUES

(43) Veröffentlichungstag der Anmeldung: 25.10.2023
(73) Patentinhaber: Wacker Chemie AG, 81737 München (DE)
(72) Erfinder: SCHÄFER, Oliver, 84489 Burghausen (DE); FUHRMANN, Oliver, 83352 Altenmarkt (DE); JOACHIMBAUER, Michael, 84367 Gumpersdorf (DE)
(74) Vertreter: Mieskes, Klaus Theoderich
(86) Internationale Anmeldenummer: PCT/EP2020/086990
(87) Internationale Veröffentlichungsnummer: WO 2022/128120

(56) Entgegenhaltungen:
- WO-A1-2017/072096
- CN-A- 106 147 003
- CN-A- 107 201 049

## Beschreibung

Die Erfindung betrifft fasergefüllte Mischungen enthaltend oxamidfunktionelle Siloxane, darin eingesetzte Prozessadditive, deren Herstellung und Verwendung.

Der Einsatz von Holz als nachhaltigem, traditionellem Werkstoff ist mit einigen Nachteilen verbunden, beispielsweise dass die Beständigkeit gegen UV-Licht und Feuchtigkeit eingeschränkt ist und der Werkstoff v.a. nach Bewitterung an der Oberfläche zum Splittern neigt. In den letzten Jahren werden vermehrt sogenannte WPC (wood polymer composite) als Holzersatzprodukte für verschiedene Einsatzzwecke eingesetzt. Diese WPC sind mit Holz- oder Naturfasern verstärkte Kunststoffe, welche zusätzlich Additive enthalten können, um einerseits die Nachteile des Holzes hinsichtlich UV-Schutz und Feuchtigkeit zu vermeiden und andererseits ein holzähnliches Erscheinungsbild zu gewährleisten. Derartige Produkte sind beispielweise als Fassadenelement oder als Terrassenbelag, in Form einer sogenannten Barfußdiele, bekannt. Der Holzfaseranteil liegt typischerweise zwischen 10 und 90%, bevorzugt zwischen 30 bis 80%, der restliche Anteil besteht im Wesentlichen aus organischen Kunststoffen, meist Polyvinylchlorid (PVC) oder Polymeren aus der Gruppe der Polyolefine, wie Polyethylen hoher Dichte (HDPE) oder Polypropylen (PP), die zusätzlich mit in der Kunststoffverarbeitung gebräuchlichen Additiven versetzt sein können. Diese Additive können Farbstoffe und Pigmente, UV-Stabilisatoren oder aber auch Flammschutzmittel sein, damit der Außeneinsatz über viele Jahre gewährleistet werden kann und ggf. die Brandbeständigkeit erhöht wird, so dass diese Profile auch im Baubereich eingesetzt werden können. Additive gegen den Befall von Bakterien, Insekten, Pilzen, insbesondere Schimmelpilz, Algen oder Termiten etc. können dem WPC ebenfalls beigemengt werden, um so die Beständigkeit im Vergleich zu natürlich gewachsenem Vollholz zu verbessern.

Diese WPC können entweder direkt als Halbzeug, wie z.B. als Profil hergestellt werden oder aber als Kunststoff-Granulat, welches in weiteren Verarbeitungsschritten umgeformt werden kann, wie z.B. Extrusion oder Spritzguss.

Die Herstellung der Natur- bzw. Holzfaser-Kunststoff-Mischungen erfolgt dabei auf typischen Kunststoffverarbeitungsmaschinen, wie z.B. Doppelschneckenextrudern oder Planetwalzenextrudern, welche eine gute Vermischung der Holzfasern mit dem Kunststoff gewährleisten sollen. Da sich mit zunehmendem Faseranteil die mechanischen Kennwerte, wie z.B. die Steifigkeit und Biegefestigkeit der so hergestellten Compounds immer weiter verbessern und diese Compounds eine immer Holz-ähnlichere Anmutung bekommen, ist es das Ziel der WPC-Hersteller, den Gehalt an Holzfasern zu maximieren. Nachteilig hieran ist jedoch, dass bei höheren Fasergehalten die innere Reibung immer weiter erhöht wird und damit sowohl die Verarbeitung erschwert als auch die Abnutzung der Mischaggregate verstärkt wird. Zur Vermeidung der vermehrt eintretenden Verarbeitungsprobleme bei höheren Fasergehalten werden hierbei sogenannte Polymer Processing Aids (PPA) wie z.B. Metallstearate, oligomere Polyolefinwachse oder Carbonsäure-Amid-Derivate eingesetzt. Diese wirken je nach Type als innere und äußere Gleitmittel und erleichtern dabei den Misch- und Verarbeitungsprozess und führen u.U. auch noch zu homogeneren, gleichmäßigeren Oberflächen der extrudierten Halbzeuge.

Nachteilig an den derzeit verwendeten PPAs ist jedoch deren bekannte Tendenz, teilweise an vorhandenen Füllstoffoberflächen zu adsorbieren und damit inaktiviert zu werden. Dies tritt insbesondere an den durch den hohen Holzfaserstoffgehalt vorhandenen Faseroberflächen auf, wodurch teilweise sehr hohe Konzentrationen von PPAs zugesetzt werden müssen. Dabei werden zwischen 2 und bis zu 6 Gew.-% PPA zugesetzt, die in diesen hohen Konzentrationen jedoch wieder einen negativen Effekt auf die Steifigkeit der WPC Blends haben. Zusätzlich nimmt die Verschweißbarkeit der so extrudierten Profile ab, was sich v.a. bei der Herstellung von Fensterrahmen aus WPC nachteilig bemerkbar macht. Darüber hinaus reagieren die eingesetzten PPAs auch mit weiteren Polymeradditiven, sogenannten Kopplern bzw. Haftvermittlern, welche durch reaktive Gruppen für eine bessere Haftung der Holzfasern an den eingesetzten Matrixkunststoffen sorgen und damit die mechanischen Eigenschaften der WPCs verbessern sollen. Auch diese Nebenreaktionen der PPAs führen damit zwangsläufig zu einer unerwünschten Verschlechterung der mechanischen Eigenschaften der WPCs. Es wurde daher nach Polymeradditiven gesucht, die nur in relativ geringen Mengen eingesetzt werden, um hier mögliche Wechselwirkungen mit Matrix- oder Fasermaterialien oder anderen Additiven möglichst zu minimieren.

Bekannt sind Untersuchungen von Hristov et al, in denen spezielle thermoplastische Silikone als Prozessadditive in WPC verwendet werden (Advances in Polymer Technology, Vol. 26, No. 2, 100-108 (2007)). Hier zeigt sich jedoch der Nachteil, dass die von Hristov verwendeten Produkte in relativ großen Zugabemengen verwendet wurden, und so neben dem gewünschten positiven Effekt auf die Verarbeitungseigenschaften zu einer teilweisen Verschlechterung der mechanischen Eigenschaften des WPC Compounds führten.

Es bestand nun die Aufgabe ein Prozessadditiv zu finden, welches die Herstellung von WPCs durch die Mischung von Kunststoffen mit Natur- und Holzfasern derart ermöglicht, dass einerseits hohe Fasermengen in den Kunststoff eingearbeitet werden können, andererseits jedoch die mechanischen Eigenschaften des WPC Compounds durch das Prozess-Additiv nicht merklich verschlechtert bzw. sogar verbessert werden und die Nachteile des Standes der Technik nicht mehr zeigen. Dies wurde durch die vorliegende Erfindung gelöst. Überraschenderweise wurde gefunden, dass man durch die Kombination von linearen Siliconen mit relativ niedrigen Molekulargewichten und geringen Anteilen an speziellen aliphatischen Oxamido-Substituenten Verbindungen erhält, welche deutliche Prozess-Verbesserungen beim Einmischen in Thermoplast/Holzfaser-Mischungen zeigen.

Das Dokument WO 2017/072096 A1 offenbart Zusammensetzungen, die ein Polysiloxanblockcopolymer, z.B. mit Harnstoffeinheiten, organische Fasern und ein Polyolefin enthalten. Es gibt kein Polysiloxan der vorliegenden Formel (I). Das Dokument CN 107 201 049 A offenbart Mischungen, die Holzpulver, ein Polyolefin und ein Polysiloxan enthalten. Das Dokument CN 106 147 003 A offenbart Mischungen, die Polyethylen, ein Aminosiloxan und organische Fasern enthalten

Gegenstand der Erfindung sind daher Mischungen enthaltend
(A) Organosiliciumverbindungen der allgemeinen Formel

   R_{3-a-b}(OR¹)ₐR²_{b}Si[OSiR₂]ₚ[OSiRR²]_{q}[OSiR²₂]ᵣOSiR_{3-a-b}(OR¹)ₐR²_{b} (I),

   wobei
   **R** gleich oder verschieden sein kann und einen einwertigen, gegebenenfalls substituierten, SiC-gebundenen Kohlenwasserstoffrest bedeutet,
   **R¹** gleich oder verschieden sein kann und Wasserstoffatom oder einen einwertigen, gegebenenfalls substituierten Kohlenwasserstoffrest bedeutet,
   **R²** eine SiC-gebundene Einheit der allgemeinen Formel

      R³-X-[CO-(CO)ₙ]-X-R⁴- (II)

      bedeutet, worin
      **X** gleich oder verschieden sein kann und -O- oder -NR^{x}- ist,
      **R³** gleich oder verschieden sein kann und monovalente, gegebenenfalls substituierte Kohlenwasserstoffreste mit mindestens 6 Kohlenstoffatomen bedeutet,
      **R⁴** bivalente, gegebenenfalls substituierte Kohlenwasserstoffreste mit 1 bis 40 Kohlenstoffatomen, wobei einzelne Kohlenstoffatome durch Sauerstoffatome oder -NR^{z}- ersetzt sein können, bedeutet,
      **R^{x}** gleich oder verschieden sein kann und Wasserstoffatom oder monovalente, gegebenenfalls substituierte Kohlenwasserstoffreste mit 1 bis 20 Kohlenstoffatomen bedeutet, wobei einzelne Kohlenstoffatome durch Sauerstoffatome ersetzt sein können,
      **R^{z}** gleich oder verschieden sein kann und Wasserstoffatom oder monovalente, gegebenenfalls substituierte Kohlenwasserstoffreste mit 1 bis 20 Kohlenstoffatomen bedeutet, wobei einzelne Kohlenstoffatome durch Sauerstoffatome ersetzt sein können,
      **n** 0 oder 1 ist,
      **a** 0, 1, 2 oder 3 ist,
      **b** 0 oder 1 ist,
      **p** eine ganze Zahl von 1 bis 1000 ist,
      **q** 0 oder eine ganze Zahl von 1 bis 100 ist und
      **r** 0 oder eine ganze Zahl von 1 bis 100,
      mit der Maßgabe, dass a+b ≤ 3 ist und mindestens ein Rest R² vorhanden ist,
(B) organische Fasern,
(C) thermoplastische Polymere und
   gegebenenfalls
(D) mit Carbonsäureanhydrid-Gruppen substituierte Polyolefine.

Beispiele für R sind Alkylreste wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste wie der n-Hexylrest; Heptylreste wie der n-Heptylrest; Octylreste wie der n-Octylrest und iso-Octylreste wie der 2,2,4-Trimethylpentylrest; Nonylreste wie der n-Nonylrest; Decylreste wie der n-Decylrest; Dodecylreste wie der n-Dodecylrest; Octadecylreste wie der n-Octadecylrest; Cycloalkylreste wie der Cyclopentyl-, Cyclohexyl-, Cycloheptylrest und Methylcyclohexylreste; Alkenylreste wie der Vinyl-, 1-Propenyl- und der 2-Propenylrest; Arylreste wie der Phenyl-, Naphthyl-, Anthryl- und Phenanthrylrest; Alkarylreste wie o-, m-, p-Tolylreste; Xylylreste und Ethylphenylreste; oder Aralkylreste wie der Benzylrest oder der **α**- und der **β**-Phenylethylrest.

Beispiele für halogenierte Reste R sind Halogenalkylreste wie der 3,3,3-Trifluor-n-propylrest, der 2,2,2,2',2',2'-Hexafluorisopropylrest und der Heptafluorisopropylrest.

Vorzugsweise bedeutet Rest R einen einwertigen, gegebenenfalls mit Fluor- und/oder Chloratomen substituierten Kohlenwasserstoffrest mit 1 bis 20 Kohlenstoffatomen, besonders bevorzugt einen Kohlenwasserstoffrest mit 1 bis 6 Kohlenstoffatomen, insbesondere um den Methyl-, Ethyl-, Vinyl- oder Phenylrest.

Beispiele für Rest R¹ sind die für den Rest R angegebenen Reste sowie über Kohlenstoffatom gebundene Polyalkylenglykolreste.

Bevorzugt handelt es sich bei Rest R¹ um Kohlenwasserstoffreste, besonders bevorzugt um Kohlenwasserstoffreste mit 1 bis 8 Kohlenstoffatomen, insbesondere um den Methyl- oder Ethylrest.

Beispiele für Rest R³ sind die für Rest R angegebenen Beispiele für gegebenenfalls substituierte Kohlenwasserstoffreste mit mindestens 6 Kohlenstoffatomen, wie etwa n-Hexylreste oder Dodecyl-Reste.

Bevorzugt handelt es sich bei Rest R³ um aliphatische Kohlenwasserstoffreste mit mindestens 6 Kohlenstoffatomen, besonders bevorzugt um aliphatische Kohlenwasserstoffreste mit mindestens 10 Kohlenstoffatomen.

Beispiele für Rest R⁴ sind Alkylenreste wie der Methylen-, Ethylen-, n-Propylen-, iso-Propylen-, n-Butylen-, iso-Butylen-, tert.-Butylen-, n-Pentylen-, iso-Pentylen-, neo-Pentylen-, tert.-Pentylenrest, Hexylenreste, Heptylenreste, Octylenreste, Nonylenreste, Decylenreste, Dodecylenreste oder Octadecylenreste; Cycloalkylenreste wie Cyclopentylenrest, 1,4-Cyclohexylenrest, Isophoronylenrest oder der 4,4'-Methylen-dicyclohexylenrest; Alkenylenreste wie der Vinylen-, n-Hexenylen-, Cyclohexenylen-, 1-Propenylen-, Allylen-, Butenylen- oder 4-Pentenylenrest; Alkinylenreste wie der Ethinylen- oder Propargylenrest; Arylenreste wie der Phenylen-, Bisphenylen-, Naphthylen-, Anthrylen- oder Phenanthrylenrest; Alkarylenreste wie o-, m-, p-Toluylenreste, Xylylenreste oder Ethylphenylenreste; oder Aralkylenreste wie der Benzylenrest, der 4,4'-Methylen-diphenylenrest, der α- oder der β-Phenylethylenrest oder der Ethylen-Propylen-Ether-Rest oder der Ethylen - Propylen-Amin-Rest.

Vorzugsweise handelt es sich bei Rest R⁴ um Alkylenreste, besonders bevorzugt um Methylen- oder n-Propylenreste.

Beispiele für Rest R^{x} und R^{z} sind unabhängig voneinander die für den Rest R angegebenen Reste sowie Wasserstoffatom.

Bevorzugt handelt es sich bei Rest R^{x} um Wasserstoffatom oder Alkylreste, besonders bevorzugt um Wasserstoffatom.

Bevorzugt handelt es sich bei Rest R^{z} um Wasserstoffatom oder Alkylreste, besonders bevorzugt um Wasserstoffatom.

Bevorzugt hat X die Bedeutung von -NR^{x}- mit R^{x} gleich der obengenannten Bedeutung.

Vorzugsweise ist Index n gleich 1.

Beispiele für Rest R² sind
H₁₃C₆-NH-CO-CO-NH-C₃H₆-, H₁₅C₇-NH-CO-CO-NH-C₃H₆-, H₁₇C₈-NH-CO-CO-NH-C₃H₆-, H₁₉C₉-NH-CO-CO-NH-C₃H₆-, H₂₁C₁₀-NH-CO-CO-NH-C₃H₆-, H₂₃C₁₁-NH-CO-CO-NH-C₃H₆-, H₂₅C₁₂-NH-CO-CO-NH-C₃H₆-, H₂₇C₁₃-NH-CO-CO-NH-C₃H₆-, H₂₉C₁₄-NH-CO-CO-NH-C₃H₆-, H₃₁C₁₅-NH-CO-CO-NH-C₃H₆-, H₃₃C₁₆-NH-CO-CO-NH-C₃H₆-, H₃₅C₁₇-NH-CO-CO-NH-C₃H₆-, H₃₇C₁₈-NH-CO-CO-NH-C₃H₆-, H₃₉C₁₉-NH-CO-CO-NH-C₃H₆-, H₄₁C₂₀-NH-CO-CO-NH-C₃H₆-, H₁₃C₆-NH-CO-NH-C₃H₆-, H₁₅C₇-NH-CO-NH-C₃H₆-, H₁₇C₈-NH-CO-NH-C₃H₆-, H₁₉C₉-NH-CO-NH-C₃H₆-, H₂₁C₁₀-NH-CO-NH-C₃H₆-, H₂₃C₁₁-NH-CO-NH-C₃H₆-, H₂₅C₁₂-NH-CO-NH-C₃H₆-, H₂₇C₁₃-NH-CO-NH-C₃H₆-, H₂₉C₁₄-NH-CO-NH-C₃H₆-, H₃₁C₁₅-NH-CO-NH-C₃H₆-, H₃₃C₁₆-NH-CO-NH-C₃H₆-, H₃₅C₁₇-NH-CO-NH-C₃H₆-, H₃₇C₁₈-NH-CO-NH-C₃H₆-, H₃₉C₁₉-NH-CO-NH-C₃H₆-, H₄₁C₂₀-NH-CO-NH-C₃H₆-, H₁₁C₆-NH-CO-CO-NH-C₃H₆-, H₁₃C₇-NH-CO-CO-NH-C₃H₆-, H₁₅C₈-NH-CO-CO-NH-C₃H₆-, H₁₇C₉-NH-CO-CO-NH-C₃H₆-, H₁₉C₁₀-NH-CO-CO-NH-C₃H₆-, H₂₁C₁₁-NH-CO-CO-NH-C₃H₆-, H₂₃C₁₂-NH-CO-CO-NH-C₃H₆-, H₂₅C₁₃-NH-CO-CO-NH-C₃H₆-, H₂₇C₁₄-NH-CO-CO-NH-C₃H₆-, H₂₉C₁₅-NH-CO-CO-NH-C₃H₆-, H₃₁C₁₆-NH-CO-CO-NH-C₃H₆-, H₃₃C₁₇-NH-CO-CO-NH-C₃H₆-, H₃₅C₁₈-NH-CO-CO-NH-C₃H₆-, H₃₇C₁₉-NH-CO-CO-NH-C₃H₆-, H₃₉C₂₀-NH-CO-CO-NH-C₃H₆-, H₁₃C₆-NH-CO-CO-NH-C₂H₄-NH-C₃H₆-, H₁₅C₇-NH-C₂H₄-NH-CO-CO-NH-C₃H₆-, H₁₇C₈-NH-CO-CO-NH-C₂H₄-NH-C₃H₆-, H₁₉C₉-NH-CO-CO-NH-C₂H₄-NH-C₃H₆-, H₂₁C₁₀-NH-CO-CO-NH-C₂H₄-NH-C₃H₆-, H₂₃C₁₁-NH-CO-CO-NH-C₂H₄-NH-C₃H₆-, H₂₅C₁₂-NH-CO-CO-NH-C₂H₄-NH-C₃H₆-, H₂₇C₁₃-NH-CO-CO-NH-C₂H₄-NH-C₃H₆-, H₂₉C₁₄-NH-CO-CO-NH-C₂H₄-NH-C₃H₆-, H₃₁C₁₅-NH-CO-CO-NH-C₂H₄-NH-C₃H₆-, H₃₃C₁₆-NH-CO-CO-NH-C₂H₄-NH-C₃H₆-, H₃₅C₁₇-NH-CO-CO-NH-C₂H₄-NH-C₃H₆-, H₃₇C₁₈-NH-CO-CO-NH-C₂H₄-NH-C₃H₆-, H₃₉C₁₉-NH-CO-CO-NH-C₂H₄-NH-C₃H₆- und H₄₁C₂₀-NH-CO-CO-NH-C₂H₄-NH-C₃H₆-, wobei H₂₁C₁₀-NH-CO-CO-NH-C₃H₆-, H₂₃C₁₁-NH-CO-CO-NH-C₃H₆-, H₂₅C₁₂-NH-CO-CO-NH-C₃H₆-, H₂₇C₁₃-NH-CO-CO-NH-C₃H₆-, H₂₉C₁₄-NH-CO-CO-NH-C₃H₆-, H₃₁C₁₅-NH-CO-CO-NH-C₃H₆-, H₃₃C₁₆-NH-CO-CO-NH-C₃H₆-, H₃₅C₁₇-NH-CO-CO-NH-C₃H₆-, H₃₇C₁₈-NH-CO-CO-NH-C₃H₆-, H₂₁C₁₀-NH-CO-CO-NH-C₂H₄-NH-C₃H₆-, H₂₃C₁₁-NH-CO-CO-NH-C₂H₄-NH-C₃H₆-, H₂₅C₁₂-NH-CO-CO-NH-C₂H₄-NH-C₃H₆-, H₂₇C₁₃-NH-CO-CO-NH-C₂H₄-NH-C₃H₆-, H₂₉C₁₄-NH-CO-CO-NH-C₂H₄-NH-C₃H₆-, H₃₁C₁₅-NH-CO-CO-NH-C₂H₄-NH-C₃H₆-, H₃₃C₁₆-NH-CO-CO-NH-C₂H₄-NH-C₃H₆-, H₃₅C₁₇-NH-CO-CO-NH-C₂H₄-NH-C₃H₆-, H₃₇C₁₈-NH-CO-CO-NH-C₂H₄-NH-C₃H₆- oder deren Mischungen bevorzugt und H₂₅C₁₂-NH-CO-CO-NH-C₃H₆-, H₂₉C₁₄-NH-CO-CO-NH-C₃H₆-, H₃₃C₁₆-NH-CO-CO-NH-C₃H₆-, H₃₇C₁₈-NH-CO-CO-NH-C₃H₆-, H₂₅C₁₂-NH-CO-CO-NH-C₂H₄-NH-C₃H₆-, H₂₉C₁₄-NH-CO-CO-NH-C₂H₄-NH-C₃H₆- oder H₃₃C₁₆-NH-CO-CO-NH-C₂H₄-NH-C₃H₆- besonders bevorzugt sind.

Vorzugsweise ist a 0 oder 1, besonders bevorzugt 0.

Vorzugsweise ist b 0 oder 1, besonders bevorzugt 1.

Bevorzugt ist p eine ganze Zahl von 10 bis 500, besonders bevorzugt eine ganze Zahl von 30 bis 300.

Bevorzugt ist q 0 oder eine ganze Zahl von 1 bis 20, besonders bevorzugt 0 oder eine ganze Zahl von 1 bis 5.

Bevorzugt ist r 0 oder eine ganze Zahl von 1 bis 10, besonders bevorzugt 0 oder eine ganze Zahl von 1 bis 5, insbesondere 0.

Die erfindungsgemäß eingesetzten Organosiliciumverbindungen der Formel (I) haben bevorzugt ein zahlenmittleres Molekulargewicht Mn von 1000 g/mol bis 35 000 g/mol und besonders bevorzugt ein zahlenmittleres Molekulargewicht Mn von 3000 g/mol bis 20 000 g/mol.

Die zahlenmittlere Molmasse Mₙ wird dabei im Rahmen der vorliegenden Erfindung mittels Size Exclusion Chromatography (SEC) gegen Polystyrol-Standard, in THF, bei 60°C, Flow Rate 1,2 ml/min und Detektion mit RI (Brechungsindex-Detektor) auf einem Säulenset Styragel HR3-HR4-HR5-HR5 von Waters Corp. USA mit einem Injektionsvolumen von 100 µl bestimmt.

Bevorzugt weisen die Organosiliciumverbindungen (A) einen Schmelzpunkt von unter 200°C auf, besonders bevorzugt von unter 100°C, ganz besonders bevorzugt von unter 75°C, jeweils bei 1013 hPa.

Der Siliciumgehalt der Organosiliciumverbindungen (A) ist bevorzugt 25 bis 37,5 Gew.-%, besonders bevorzugt 30 bis 37 Gew.-%.

Bevorzugt handelt es sich bei den erfindungsgemäß eingesetzten Organosiliciumverbindungen der Formel (I) um R₂R²Si[OSiR₂]ₚ[OSiRR²]_{q}OSiR₂R² mit
R = Methyl, R² = H₂₅C₁₂-NH-[CO-CO]-NH-(CH₂)₃-, p = 150, q = 0,
R = Methyl, R² = H₂₅C₁₂-NH-[CO-CO]-NH-(CH₂)₃-, p = 80, q = 0,
R = Methyl, R² = H₂₅C₁₂-NH-[CO-CO]-NH-(CH₂)₃-, p = 250, q = 0,
R = Methyl, R² = H₃₃C₁₆-NH-[CO-CO]-NH-(CH₂)₃-, p = 150, q = 0,
R = Methyl, R² = H₃₃C₁₆-NH-[CO-CO]-NH-(CH₂)₃-, p = 80, q = 0,
R = Methyl, R² = H₃₃C₁₆-NH-[CO-CO]-NH-(CH₂)₃-, p = 250, q = 0,
R = Methyl, R² = H₃₇C₁₈-NH-[CO-CO]-NH-(CH₂)₃-, p = 150, q = 0,
R = Methyl, R² = H₃₇C₁₈-NH-[CO-CO]-NH-(CH₂)₃-, p = 80, q = 0,
R = Methyl, R² = H₃₇C₁₈-NH-[CO-CO]-NH-(CH₂)₃-, p = 250, q = 0
R = Methyl, R² = H₂₅C₁₂-NH-CO-NH-(CH₂)₃-, p = 150, q = 0,
R = Methyl, R² = H₂₅C₁₂-NH-CO-NH-(CH₂)₃-, p = 80, q = 0,
R = Methyl, R² = H₂₅C₁₂-NH-CO-NH-(CH₂)₃-, p = 250, q = 0,
R = Methyl, R² = H₃₃C₁₆-NH-CO-NH-(CH₂)₃-, p = 150, q = 0,
R = Methyl, R² = H₃₃C₁₆-NH-CO-NH-(CH₂)₃-, p = 80, q = 0,
R = Methyl, R² = H₃₃C₁₆-NH-CO-NH-(CH₂)₃-, p = 250, q = 0,
R = Methyl, R² = H₂₅C₁₂-NH-[CO-CO]-NH-(CH₂)₃-, p = 150, q = 2,
R = Methyl, R² = H₂₅C₁₂-NH-[CO-CO]-NH-(CH₂)₃-, p = 80, q = 1,
R = Methyl, R² = H₂₅C₁₂-NH-[CO-CO]-NH-(CH₂)₃-, p = 250, q = 3,
R = Methyl, R² = H₂₅C₁₂-NH-[CO-CO]-NH-(CH₂)₂-NH-(CH₂)₃-, p = 150, q = 0,
R = Methyl, R² = H₂₅C₁₂-NH-[CO-CO]-NH-(CH₂)₂-NH-(CH₂)₃-, p = 80, q = 0,
R = Methyl, R² = H₂₅C₁₂-NH-[CO-CO]-NH-(CH₂)₂-NH-(CH₂)₃-, p = 250, q = 0,
R = Methyl, R² = H₂₅C₁₂-NH-[CO-CO]-NH-(CH₂)₂-NH-(CH₂)₃-, p = 250, q = 3,

oder um Organosiliciumverbindungen der Formel (I) R₃Si[OSiR₂]ₚ[OSiRR²]_{q}OSiR₃ mit
   R = Methyl, R² = H₂₅C₁₂-NH-[CO-CO]-NH-(CH₂)₃-, p = 150, q = 2,
   R = Methyl, R² = H₂₅C₁₂-NH-[CO-CO]-NH-(CH₂)₃-, p = 80, q = 1,
   R = Methyl, R² = H₂₅C₁₂-NH-[CO-CO]-NH-(CH₂)₃-, p = 250, q = 4,
   R = Methyl, R² = H₂₅C₁₂-NH-CO-NH-(CH₂)₃-, p = 150, q = 2,
   R = Methyl, R² = H₂₅C₁₂-NH-CO-NH-(CH₂)₃-, p = 80, q = 1,
   R = Methyl, R² = H₂₅C₁₂-NH-CO-NH-(CH₂)₃-, p = 250, q = 4,
   R = Methyl, R² = H₂₅C₁₂-NH-[CO-CO]-NH-(CH₂)₂-NH-(CH₂)₃-, p = 150, q = 2,
   R = Methyl, R² = H₂₅C₁₂-NH-[CO-CO]-NH-(CH₂)₂-NH-(CH₂)₃-, p = 80, q = 1,
   R = Methyl, R² = H₂₅C₁₂-NH-[CO-CO]-NH-(CH₂)₂-NH-(CH₂)₃-, p = 250, q = 4,
   R = Methyl, R² = H₃₃C₁₆-NH-[CO-CO]-NH-(CH₂)₃-, p = 150, q = 2,
   R = Methyl, R² = H₃₃C₁₆-NH-[CO-CO]-NH-(CH₂)₃-, p = 80, q = 1,
   R = Methyl, R² = H₃₃C₁₆-NH-[CO-CO]-NH-(CH₂)₃-, p = 250, q = 3,
   R = Methyl, R² = H₃₇C₁₈-NH-[CO-CO]-NH-(CH₂)₃-, p = 150, q = 2,
   R = Methyl, R² = H₃₇C₁₈-NH-[CO-CO]-NH-(CH₂)₃-, p = 80, q = 1,
   R = Methyl, R² = H₃₇C₁₈-NH-[CO-CO]-NH-(CH₂)₃-, p = 250, q = 3,
   R = Methyl, R² = H₃₃C₁₆-NH-[CO-CO]-NH-(CH₂)₂-NH-(CH₂)₃-, p = 150, q = 2,
   R = Methyl, R² = H₃₃C₁₆-NH-[CO-CO]-NH-(CH₂)₂-NH-(CH₂)₃-, p = 80, q = 1,
   R = Methyl, R² = H₃₃C₁₆-NH-[CO-CO]-NH-(CH₂)₂-NH-(CH₂)₃-, p = 250, q = 4,
besonders bevorzugt um R₂R²Si[OSiR₂]ₚ[OSiRR²]_{q}OSiR₂R² mit
   R = Methyl, R² = H₂₅C₁₂-NH-[CO-CO]-NH-(CH₂)₃-, p = 150, q = 0,
   R = Methyl, R² = H₃₃C₁₆-NH-[CO-CO]-NH-(CH₂)₃-, p = 150, q = 0,
   R = Methyl, R² = H₃₇C₁₈-NH-[CO-CO]-NH-(CH₂)₃-, p = 150, q = 0,
   R = Methyl, R² = H₂₅C₁₂-NH-[CO-CO]-NH-(CH₂)₃-, p = 150, q = 2,
   R = Methyl, R² = H₂₅C₁₂-NH-[CO-CO]-NH-(CH₂)₂-NH-(CH₂)₃-, p = 150, q = 0,
oder um Organosiliciumverbindungen der Formel (I) R₃Si[OSiR₂]ₚ[OSiRR²]_{q}OSiR₃ mit
   R = Methyl, R² = H₂₅C₁₂-NH-[CO-CO]-NH-(CH₂)₃-, p = 150, q = 2,
   R = Methyl, R² = H₂₅C₁₂-NH-[CO-CO]-NH-(CH₂)₃-, p = 250, q = 3,
   R = Methyl, R² = H₃₃C₁₆-NH-[CO-CO]-NH-(CH₂)₃-, p = 150, q = 2,
   R = Methyl, R² = H₃₃C₁₆-NH-[CO-CO]-NH-(CH₂)₃-, p = 250, q = 4,
   R = Methyl, R² = H₃₇C₁₈-NH-[CO-CO]-NH-(CH₂)₃-, p = 150, q = 2,
   R = Methyl, R² = H₃₇C₁₈-NH-[CO-CO]-NH-(CH₂)₃-, p = 250, q = 4,
   R = Methyl, R² = H₃₃C₁₆-NH-[CO-CO]-NH-(CH₂)₂-NH-(CH₂)₃-, p = 150, q = 2.

Der Anteil der Organosiliciumverbindungen (A) in der erfindungsgemäßen Mischung beträgt vorzugsweise zwischen 100 Gew.-ppm und 20000 Gew.-ppm, bevorzugt zwischen 250 Gew.-ppm und 10000 Gew.-ppm, ganz besonders bevorzugt zwischen 500 Gew.-ppm und 7000 Gew.-ppm.

Beispiele für erfindungsgemäß eingesetzte thermoplastische Polymere (C) sind thermoplastische Polyolefine wie z.B. Polyethylen oder Polypropylen; sowie Polyamid, Polyethylenterephthalat, Polybutylenterephthalat, thermoplastische Elastomere auf Basis von vernetztem Kautschuk, Ethylen-Vinylacetat, Ethylen-Butylacrylat, Polyhydroxybutyrat und/oder Copolymere oder Mischungen hiervon sowie Polystyrol, schlagzähmodifiziertes Polystyrol, Styrol-Acrylnitril-Copolymere, Acrylnitril-Butadien-Styrol-Copolymere, Polyvinylchlorid, Polyvinylidenfluorid, Ethylentetrafluorethylen (ETFE), Polymethylmethacrylat und deren Copolymere oder Mischungen.

Erfindungsgemäß eingesetzte Polyolefine (C) enthalten besonders bevorzugt Einheiten der allgemeinen Formel

[-CR⁶R⁷-CR⁸R⁹-]ₓ (III)

wobei R⁶, R⁷, R⁸ und R⁹ jeweils unabhängig voneinander Wasserstoffatom, gesättigte Kohlenwasserstoffreste, ungesättigte Kohlenwasserstoffreste, aromatische Kohlenwasserstoffreste, Vinylesterreste, (Meth)acrylsäurereste oder Halogenatom bedeuten und x eine Zahl zwischen 100 und 100 000 ist.

Bevorzugt sind die Reste R⁶, R⁷, R⁸ und R⁹ jeweils unabhängig voneinander Wasserstoffatom, gesättigte Kohlenwasserstoffreste, wie Methyl-, Butyl- oder Hexylrest, aromatische Kohlenwasserstoffreste, wie der Phenylrest, oder Halogenatome, wie Chlor oder Fluor, wobei Wasserstoffatom, Methylrest oder Chloratom besonders bevorzugt sind.

Bevorzugte Monomere zur Herstellung von Komponente (C) sind Ethylen, Propylen, Vinylchlorid, Vinylacetat, Styrol, 1-Buten, 1-Hexen, 1-Octen oder Butadien oder deren Mischungen, besonders bevorzugt Ethylen, Propylen oder Vinylchlorid.

Bevorzugte Beispiele für die erfindungsgemäß eingesetzten Komponente (C) sind Polyethylene niederer und hoher Dichte (LDPE, LLDPE, HDPE), Homo- und Copolymere des Propylens mit beispielsweise Ethylen, Buten, Hexen und Octen (PP), Homo- und Copolymere des Ethylens mit Vinylacetates (EVA) oder Butylacrylat (EBA), Polyvinylchlorid (PVC) oder Polyvinylchlorid-Ethylen-Copolymere oder Polystyrole (PS, HIPS, EPS), wobei Polyethylen, Polypropylen, Polyvinylchlorid, Ethylen-Vinylacetat-Copolymere (EVA) oder deren Mischungen besonders bevorzugt sind.

Bei den Polymeren (C) handelt es sich ganz besonders bevorzugt um Polyethylen höherer Dichte (HDPE), um Polypropylen, um Ethylen-Vinylacetat-Copolymere (EVA) oder deren Mischungen.

Bei den erfindungsgemäß eingesetzten thermoplastischen Polymeren (C) bzw. deren Mischungen ist die Temperatur, bei welcher der Verlustfaktor (G"/G') gemäß DIN EN ISO 6721-2:2008 den Wert von 1 einnimmt, bevorzugt mindestens 40°C, besonders bevorzugt mindestens 100°C.

Die polymere Struktur der thermoplastischen Polymere (C) kann linear aber auch verzweigt sein.

Die Art der eingesetzten organischen Polymere (C) bestimmt im Wesentlichen die Verarbeitungstemperatur der erfindungsgemäßen Mischung.

Der Anteil der thermoplastischen Polymere (C) in den erfindungsgemäßen Mischungen beträgt vorzugsweise 10 Gew.-% bis 70 Gew.-%, besonders bevorzugt 15 Gew.-% bis 50 Gew.-%, ganz besonders bevorzugt 25 bis 45 Gew.-%.

Bei der erfindungsgemäß eingesetzten Komponente (C) handelt es sich um handelsübliche Produkte bzw. diese können nach in der Chemie gängigen Verfahren hergestellt werden.

Bei den erfindungsgemäß eingesetzten organischen Fasern (B) handelt es sich bevorzugt um Zellulose enthaltende organische Fasern, wobei organische Fasern mit einem Gehalt an Zellulose von 30 bis 55 Gew.-% besonders bevorzugt sind. Bevorzugt handelt es sich bei den Zellulose enthaltenden organischen Fasern (B) um Zellulose enthaltende Naturfasern, vorzugsweise pflanzlichen Ursprungs, insbesondere um Holz.

Holz, welches als Komponente (B) eingesetzt werden kann, besteht vorzugsweise aus 30 bis 55 Gew.-% Zellulose, 15 bis 35 Gew.-% Polyose und 15 bis 35 Gew.-% Lignin.

Die erfindungsgemäß eingesetzten organischen Fasern (B) können beliebige Geometrien annehmen, bevorzugt werden jedoch Fasern, deren Längen/Durchmesser-Verhältnis größer 2 und ganz besonders bevorzugt größer 4 ist.

Beispiele für erfindungsgemäß eingesetzte organische Fasern (B) sind Fasern aus Laub- oder Nadelhölzern wie beispielsweise Ahorn, Eiche, Zedern, Pinien und Fichte, Fasern aus Gräsern oder Schalen von Fruchtkörpern oder von anderen Faserpflanzen wie Flachs, Rohrzucker, Erdnusspflanzen, Kokosnüssen, Sisal, Bambus, Hanf und Reisschalen oder Fasern aus Verarbeitungsresten von Pflanzenfasern wie z.B. Bagasse. Mischungen der genannten Faserarten können ebenfalls verwendet werden. Die Holz- und Naturfasern können dabei auch als Abfall industrieller Prozesse anfallen, wie z.B. der Möbel-, Parkett- oder Papierindustrie.

Als erfindungsgemäß eingesetzte Komponente (B) können auch durchaus Holzabfälle wie beispielsweise Rinde, Sägemehl oder Schnittholz eingesetzt werden, die lediglich im Hinblick auf Farbe und Partikelgröße selektiert werden, um die gewünschten Eigenschaften der daraus herzustellenden Formteile zu beeinflussen.

Falls als Komponente (B) Holz eingesetzt wird, handelt es sich bevorzugt um Holzfasern oder Holzmehl, besonders bevorzugt um kompaktiertes Holzmehl, insbesondere solches mit einer Partikelgröße von 150 µm bis 500 µm.

Längere Holzfasern haben Einfluss auf die Steifigkeit der Formteile, verringern jedoch deren Schlagbeständigkeit. Die kleineren Partikel haben zwar gewissen Einfluss auf die Steifigkeit, verringern aber dafür die Bruchfestigkeit der Formteile. Wegen der Vermeidung von Holzmehlstaub wird erfindungsgemäß kompaktiertes Holzmehl als Komponente (B) bevorzugt eingesetzt.

Falls als Komponente (B) Holz eingesetzt wird, liegt dessen Wassergehalt vorzugsweise bei 6 bis 8 Gew.-%, kann aber durch Trocknen auf einen bevorzugten Bereich von 0,5 bis 2,0 Gew.-% reduziert werden. Gegebenenfalls kann das zu verwendende Holz durch Vermahlen in Kugelmühlen oder ähnlichem zu Pulver zerkleinert werden.

Der Anteil der organischen Fasern (B) in den erfindungsgemäßen Mischungen beträgt bevorzugt zwischen 30 und 90 Gew.-%, besonders bevorzugt zwischen 45 und 85 Gew.-%, insbesondere zwischen 50 und 70 Gew.-%.

Bei der gegebenenfalls eingesetzten Komponente (D) handelt es sich bevorzugt um Polyolefine, besonders bevorzugt Polyethylen oder Polypropylen, deren Polymerrückgrat teilweise mit Carbonsäureanhydrid-Gruppen substituiert sind, besonders bevorzugt um Polyolefine, die teilweise Maleinsäureanhydrid- oder Malonsäureanhydrid- oder Bernsteinsäureanhydrid-Gruppen tragen. Diese Komponente erfüllt im erfindungsgemäßen Naturfasercompound bevorzugt die Aufgabe einer verbesserten Anbindung der Naturfasern an die Polymermatrix und damit eine Verbesserung der mechanischen Eigenschaften wie Steifigkeit und Festigkeit.

Beispiele für gegebenenfalls eingesetzte Komponente (D) sind kommerziell erhältliche Produkte aus der Lotader^{®}- und der Orevac^{®}-Produktlinie von ARKEMA SA (F-Colombes), Produkte der ADMER^{®}-Familie von Mitsui&Co Deutschland GmbH (D-Düsseldorf) oder Produkte der SCONA^{®} Produktreihe von BYK Kometra GmbH (D-Schkopau).

Falls mit Carbonsäureanhydrid-Gruppen substituierte Polyolefine (D) eingesetzt werden, dann werden diese in Mengen von vorzugsweise 0,1 Gew.-% bis 5 Gew.-%, bevorzugt in Mengen von 0,5 Gew.-% bis 3 Gew.-% und besonders bevorzugt in Mengen von 1 Gew.-% bis 2,5 Gew.-% eingesetzt, jeweils bezogen auf das Gesamtgewicht der erfindungsgemäßen Mischung. Die erfindungsgemäßen Mischungen enthalten bevorzugt Komponente (D).

Zusätzlich zu den Komponenten (A), (B) (C) und gegebenenfalls (D) können die erfindungsgemäßen Mischungen weitere Stoffe enthalten, wie z.B. Flammschutzmittel (E), Biozide (F), Pigmente (G), UV-Absorber (H), HALS-Stabilisatoren (I), anorganische Fasern (J), Gleitmittel (K) und Haftvermittler (L).

Beispiele für erfindungsgemäß gegebenenfalls eingesetzte Flammschutzmittel (E) sind organische Flammschutzmittel auf Basis halogenierter organischer Verbindungen oder anorganische Flammschutzmittel z.B. Aluminiumhydroxid (ATH) oder Magnesiumhydroxid.

Falls Flammschutzmittel (E) eingesetzt werden, sind anorganische Flammschutzmittel wie ATH bevorzugt.

Beispiele für erfindungsgemäß gegebenenfalls eingesetzte Biozide (F) sind anorganische Fungizide, unter anderem Borate wie z.B. Zinkborat oder organische Fungizide wie z.B. Thiabendazol.

Beispiele für erfindungsgemäß gegebenenfalls eingesetzte Pigmente (G) sind organische Pigmente oder anorganische Pigmente wie z.B. Eisenoxide oder Titandioxid.

Falls Pigmente (G) eingesetzt werden, handelt es sich um Mengen von bevorzugt 0,2 bis 7 Gew.-%, besonders bevorzugt 0,5 bis 3 Gew.-%. Bevorzugt werden Pigmente (G) eingesetzt, insbesondere in Form einer Vormischung mit Komponente (C).

Beispiele für erfindungsgemäß gegebenenfalls eingesetzte UV-Absorber (H) sind Benzophenone, Benzotriazole oder Triazine. Falls UV-Absorber (H) eingesetzt werden, sind Benzotriazole und Triazine bevorzugt.

Beispiele für erfindungsgemäß gegebenenfalls eingesetzte HALS-Stabilisatoren (I) sind z.B. Piperidin oder Piperidyl-Derivate und sind u.a. unter dem Markennamen Tinuvin^{®} (BASF, D-Ludwigshafen) erhältlich.

Beispiele für die erfindungsgemäß gegebenenfalls eingesetzten anorganischen Fasern (J) sind Glasfasern, Basaltfasern oder Wollastonite, wobei Glasfasern bevorzugt sind.

Falls anorganische Fasern (J) eingesetzt werden, handelt es sich um Mengen von bevorzugt 1 bis 30 Gew.-%, besonders bevorzugt 5 bis 15 Gew.-%. Die erfindungsgemäßen Mischungen enthalten bevorzugt keine Komponente (J).

Beispiele für erfindungsgemäß gegebenenfalls eingesetzte Komponente (K) sind sogenannte externe Gleitmittel wie Molybdändisulfid, Silikonöle, Fettalkohole, Fettalkohol-dicarbonsäureester, Fettsäureester, Fettsäuren, Fettsäuremonoamide, Fettsäurediamide (Amidwachs), Metallseifen, oligomere Fettsäureester (Fettsäurekomplexester), Fettalkohol-Fettsäureester, Wachssäuren, Wachssäureester, beispielsweise Montansäureester und teilverseifte Montansäureester, Paraffine oder deren Derivate.

Bevorzugt handelt es sich bei der erfindungsgemäß gegebenenfalls eingesetzten Komponente (K) um Fettalkohole, Fettalkohol-dicarbonsäureester, Fettsäureester, Fettsäuren, Fettsäuremonoamide, Fettsäurediamide (Amidwachs), Metallseifen, oligomere Fettsäureester (Fettsäurekomplexester) Fettalkohol-Fettsäureester, Wachssäuren oder Wachssäureester, wobei Fettsäureester oder Fettsäurediamide besonders bevorzugt sind.

Falls Komponente (K) eingesetzt wird, handelt es sich um Mengen von bevorzugt 0,1 bis 5 Gew.-%, besonders bevorzugt 0,15 bis 2 Gew.-%. Die erfindungsgemäßen Mischungen enthalten bevorzugt Komponente (K).

Beispiele für gegebenenfalls eingesetzte Haftvermittler (L) sind Polybutylacrylate, Polybutylacrylat-Ethylen-Copolymere, Polyvinylacetate, Polyvinylalkohole, Polyvinylacetat-Ethylen-Copolymere, Polyvinylalkohol-Ethylen-Copolymere, teilverseifte Polyvinylacetete, teilverseifte Polyvinylacetat-Ethylen-Copolymere sowie mit Alkoxy-Silylgruppen funktionalisierte Polyethylene und mit Alkoxysilyl-gruppen funktionalisierte Polypropylene, wobei Polyvinylacetate, Polyvinylacetat-Ethylen-Copolymere und teilverseifte Polyvinylacetat-Ethylen-Copolymere bevorzugt und Polyvinylacetat-Ethylen-Copolymere besonders bevorzugt sind.

Falls Komponente (L) eingesetzt wird, handelt es sich um Mengen von bevorzugt 0,2 bis 10 Gew.-%, besonders bevorzugt 0,5 bis 5 Gew.-%. Die erfindungsgemäßen Mischungen enthalten bevorzugt Komponente (L).

Bevorzugt handelt es sich bei den erfindungsgemäßen Mischungen um solche enthaltend
(A) Organosiliciumverbindungen der Formel (I),
(B) organische Fasern,
(C) thermoplastische Polymere,

gegebenenfalls (D) mit Carbonsäureanhydrid-Gruppen substituierte Polyolefine,
gegebenenfalls (E) Flammschutzmittel,
gegebenenfalls (F) Biozide,
gegebenenfalls (G) Pigmente,
gegebenenfalls (H) UV-Absorber,
gegebenenfalls (I) HALS-Stabilisatoren,
gegebenenfalls (J) anorganische Fasern,
gegebenenfalls (K) Gleitmittel und
gegebenenfalls Haftvermittler (L).

Besonders bevorzugt handelt es sich bei den erfindungsgemäßen Mischungen um solche enthaltend
(A) Organosiliciumverbindungen der Formel (I),
(B) Holzfasern,
(C) HDPE,
(D) mit Carbonsäureanhydrid-Gruppen substituierte Polyethylen,
(G) Pigmente,
(K) Gleitmittel und
(L) Haftvermittler.

In einer weiteren besonders bevorzugten Ausführungsform handelt es sich bei den erfindungsgemäßen Mischungen um solche enthaltend
(A) Organosiliciumverbindungen der Formel(I),
(B) Holzfasern,
(C) Polypropylen,
(D) mit Carbonsäureanhydrid-Gruppen substituiertes Polypropylen,
(G) Pigmente,
(K) Gleitmittel und
(L) Haftvermittler.

In einer weiteren besonders bevorzugten Ausführungsform handelt es sich bei den erfindungsgemäßen Mischungen um solche enthaltend
(A) Organosiliciumverbindungen der allgemeinen Formel (I),
(B) organische Fasern,
(C) Polypropylen,
(D) mit Carbonsäureanhydrid-Gruppen substituierte Polypropylen,
(G) Pigmente,
(H) UV-Absorber,
(K) Gleitmittel und
(L) Haftvermittler.

In einer weiteren besonders bevorzugten Ausführungsform handelt es sich bei den erfindungsgemäßen Mischungen um solche enthaltend
(A) Organosiliciumverbindungen der allgemeinen Formel (I),
(B) organische Fasern,
(C) HDPE,
(D) mit Carbonsäureanhydrid-Gruppen substituiertes Polyethylen,
(G) Pigmente,
(H) UV-Absorber,
(K) Gleitmittel und
(L) Haftvermittler.

In einer weiteren besonders bevorzugten Ausführungsform handelt es sich bei den erfindungsgemäßen Mischungen um solche enthaltend
(A) Organosiliciumverbindungen der allgemeinen Formel (I),
(B) organische Fasern,
(C) PVC und
(K) Gleitmittel.

Die erfindungsgemäßen Mischungen enthalten über die Komponenten (A) bis (L) hinausgehend bevorzugt keine weiteren Bestandteile.

Bei den einzelnen Bestandteilen der erfindungsgemäßen Mischungen kann es sich jeweils um eine Art eines solchen Bestandteils wie auch um ein Gemisch aus mindestens zwei verschiedenen Arten derartiger Bestandteile handeln.

Die erfindungsgemäßen Mischungen können nach beliebigen und bisher bekannten Verfahren hergestellt werden, wie z.B. Vermischen der Komponenten in beliebiger Reihenfolge. Hierzu können Mischer oder Kneter oder Extruder nach dem Stand der Technik verwendet werden.

Ein weiterer Gegenstand der vorliegenden Erfindung ist ein Verfahren zur Herstellung der erfindungsgemäßen Mischungen durch Vermischen der einzelnen Komponenten in beliebiger Reihenfolge.

In einer bevorzugten Ausführungsform des erfindungsgemäßen Verfahrens wird die Komponente (A) zusammen mit der Komponente (B) und der Komponente (C) sowie gegebenenfalls mit einer oder mehreren der Komponenten (D) bis (L) vermischt. Die Vermischung erfolgt dabei bei Temperaturen bevorzugt zwischen 100°C und 230°C, besonders bevorzugt bei Temperaturen zwischen 160°C und 200°C. Das Vermischen kann dabei kontinuierlich, diskontinuierlich oder semikontinuierlich durchgeführt werden. Für den Mischvorgang können alle bisher bekannten Mischer, Kneter oder Extruder verwendet werden, wobei diese verwendeten Komponenten entweder einzeln oder als physikalische Mischung mehrerer Komponenten in den Mischer zugegeben werden.

Da die Organosiliciumverbindung (A) bevorzugt nur in sehr geringen Mengen eingesetzt wird, ist es wünschenswert, die Komponente (A) in einem technischen Prozess in den benötigten Mengen genau zu dosieren und auch während des Verarbeitungsprozesses möglichst homogen in der erfindungsgemäßen Mischung zu verteilen, um hier eine gleichmäßige Wirksamkeit während des Verarbeitungsprozesses zu gewährleisten. Dies wurde überraschenderweise dadurch erreicht, dass die Organosiliciumverbindung (A) in einer geeigneten Vorabmischung eingesetzt wird.

Ein weiterer Gegenstand der Erfindung sind Zusammensetzungen (Z) enthaltend
(A) mindestens eine Organosiliciumverbindung der allgemeinen Formel (I),
(C1) thermoplastische Polymere, ausgewählt aus der Gruppe bestehend aus Ethylen-Vinylacetat-Copolymeren und Ethylen-Alkylacrylat-Copolymeren, und
gegebenenfalls (Y) Additive.

Der Anteil der thermoplastischen Polymere (C1) in den erfindungsgemäßen Zusammensetzungen (Z) beträgt vorzugsweise 30 bis 99,99 Gew.-%, besonders bevorzugt 50 bis 90 Gew.-%, ganz besonders bevorzugt 55 bis 85 Gew.-%.

Erfindungsgemäß eingesetzte thermoplastische Polymere (C1) enthalten bevorzugt Einheiten der allgemeinen Formel

[-CH₂-CHR¹⁰-]ₓ (IV),

wobei R¹⁰ jeweils unabhängig voneinander Wasserstoffatom, Vinylesterreste oder Alkylacrylatreste bedeuten und x eine Zahl zwischen 100 und 100 000 ist.

Bevorzugt sind die Reste R¹⁰ jeweils unabhängig voneinander Wasserstoffatom, Alkylacrylatreste wie Ethylacrylat oder Butylacrylat-Rest oder Vinylesterreste wie Essigsäurevinylester-Rest wobei Wasserstoffatom, Butylacrylatrest oder Essigsäurevinylester-Rest besonders bevorzugt sind.

Beispiele für erfindungsgemäß eingesetzte Polymere (C1) sind Ethylen-Vinylacetat-Copolymere (EVA), Ethylen-Methylacrylat-Copolymer (EMA) oder Ethylen-Butylacrylat-Copoylmere (EBA) sowie Mischungen hiervon, wobei Ethylen-Vinylacetat-Copolymere (EVA) oder Ethylen-Butylacrylat-Copoylmere (EBA) bevorzugt sind und Ethylen-Vinylacetat-Copolymere (EVA) ganz besonders bevorzugt sind.

Bevorzugte Monomere zur Herstellung von Komponente (C1) sind Ethylen, Vinylacetat, Methylacrylat, Butylacrylat oder deren Mischungen, besonders bevorzugt Ethylen oder Vinylacetat.

Der Anteil an Ethylen in den eingesetzten Polymeren (C1) beträgt bevorzugt von 50 Gew.-% bis 95 Gew.-%, besonders bevorzugt von mindestens 60 Gew.-% bis 90 Gew.-%, ganz besonders bevorzugt von 70 Gew.-% bis 85 Gew.-%.

Bei den erfindungsgemäß eingesetzten thermoplastischen Polymeren (C1) ist die Temperatur, bei welcher der Verlustfaktor (G"/G') gemäß DIN EN ISO 6721-2:2008 den Wert von 1 einnimmt, bevorzugt zwischen 40°C und 200°C, besonders bevorzugt zwischen 40°C und 150°C, ganz besonders bevorzugt zwischen 40°C und 100°C.

Die polymere Struktur der thermoplastischen Polymere (C1) kann linear aber auch verzweigt sein.

Die Art der eingesetzten organischen Polymere (C1) bestimmt im Wesentlichen die Verarbeitungstemperatur der erfindungsgemäßen Mischung.

Bei der erfindungsgemäß eingesetzten Komponente (C1) handelt es sich um handelsübliche Produkte bzw. diese können nach in der Chemie gängigen Verfahren hergestellt werden.

Die in der Zusammensetzung (Z) gegebenenfalls ebenfalls eingesetzten Additive (Y) können aus der Gruppe der oben beschriebenen Komponenten (D) bis (L) gewählt werden. Bevorzugt werden hier jedoch Additive aus der Gruppe der Gleitmittel (K) verwendet.

Beispiele für erfindungsgemäß gegebenenfalls eingesetzte Komponente (Y) sind daher v.a. Gleitmittel wie Molybdändisulfid, Silikonöle, Fettalkohole, Fettalkohol-dicarbonsäureester, Fettsäureester, Fettsäuren, Fettsäuremonoamide, Fettsäurediamide (Amidwachs), Metallseifen, oligomere Fettsäureester (Fettsäurekomplexester) Fettalkohol-Fettsäureester, Wachssäuren, Wachssäureester, beispielsweise Montansäureester und teilverseifte Montansäureester, Paraffine oder deren Derivate.

Bevorzugt handelt es sich bei der erfindungsgemäß gegebenenfalls eingesetzten Komponente (Y) um gesättigte Fettsäureester, ungesättigte Fettsäureester, ethoxylierte gesättigte Fettsäureester, oder ethoxylierte ungesättigte Fettsäureester, wobei gesättigte Fettsäureester oder ethoxylierte gesättigte Fettsäureester besonders bevorzugt sind.

Falls Komponente (Y) eingesetzt wird, handelt es sich um Mengen von bevorzugt 2 bis 25 Gew.-%, besonders bevorzugt 10 bis 20 Gew.-%. Die erfindungsgemäßen Zusammensetzungen (Z) enthalten bevorzugt Komponente (Y).

Ein weiterer Gegenstand der vorliegenden Erfindung ist ein Verfahren zur Herstellung der erfindungsgemäßen Zusammensetzungen (Z) durch Vermischen der einzelnen Komponenten in beliebiger Reihenfolge.

In einer bevorzugten Ausführungsform zur Herstellung der erfindungsgemäßen Zusammensetzung (Z) wird die Komponente (A) zusammen mit Komponente (C1) sowie gegebenenfalls mit einer oder mehrerer Komponenten (Y) vermischt. Die Vermischung erfolgt dabei bei Temperaturen bevorzugt zwischen 70°C und 180°C, besonders bevorzugt bei Temperaturen zwischen 90°C und 150°C. Das Vermischen kann dabei kontinuierlich, diskontinuierlich oder semikontinuierlich durchgeführt werden. Für den Mischvorgang können alle bisher bekannten Mischer, Kneter oder Extruder verwendet werden, wobei diese verwendeten Komponenten entweder einzeln oder als physikalische Mischung mehrerer Komponenten in den Mischer zugegeben werden können.

Bevorzugt wird das Vermischen der Komponenten (A) und (C1) und ggf. der Komponente (Y) kontinuierlich in einem Extruder oder Kneter nach dem Stand der Technik durchgeführt. Bevorzugt ist in dieser Vormischung das Copolymer (A) in einer Menge zwischen 2 und 35 Gew.-%, besonders bevorzugt zwischen 10 und 30 Gew.-%, insbesondere bevorzugt zwischen 12 und 25 Gew.-%, jeweils bezogen auf das Gewicht der Vormischung, enthalten.

Die erfindungsgemäß hergestellte Vormischung (Z) liegt dabei bevorzugt in Granulatform oder in Pulverform vor, bevorzugt jedoch in Granulatform. Durch mechanisches Vermahlen kann das Granulat auch zu einem Pulver verarbeitet werden bzw. durch eine entsprechende Granulierungsanlage auch als Mikrogranulat erhalten werden.

In einer besonders bevorzugten Ausführungsform des erfindungsgemäßen Verfahrens wird erfindungsgemäße Zusammensetzung (Z) mit der Komponente (B), der Komponente (C) sowie gegebenenfalls einer oder mehrerer der Komponenten (D) bis (L) vermischt. Das Vermischen kann dabei kontinuierlich, diskontinuierlich oder semikontinuierlich durchgeführt werden. Für den Mischvorgang können alle bisher bekannten Mischer, Kneter oder Extruder verwendet werden. Die Vermischung erfolgt dabei ebenfalls bei Temperaturen bevorzugt zwischen 100°C und 230°C, besonders bevorzugt bei Temperaturen zwischen 160°C und 200°C. Das Vermischen kann dabei kontinuierlich, diskontinuierlich oder semikontinuierlich durchgeführt werden. Für den Mischvorgang können alle bisher bekannten Mischer, Kneter oder Extruder verwendet werden, wobei diese verwendeten Komponenten entweder einzeln oder als physikalische Mischung mehrerer Komponenten in den Mischer zugegeben werden.

Das erfindungsgemäße Verfahren kann in Anwesenheit oder Abwesenheit von Lösungsmittel stattfinden, wobei die lösungsmittelfreie Herstellung bevorzugt ist.

Das erfindungsgemäße Verfahren kann kontinuierlich, diskontinuierlich oder semikontinuierlich durchgeführt werden, bevorzugt jedoch kontinuierlich.

Das erfindungsgemäße Verfahren wird bevorzugt in kontinuierlich arbeitenden Knetern oder Mischern oder Extrudern durchgeführt, wobei die erfindungsgemäß zu mischenden Einzelkomponenten entweder in Reinform oder als Vormischung jeweils gravimetrisch oder volumetrisch dem Mischaggregat kontinuierlich zugeführt werden. Komponenten, die in der Gesamtmischung mit einem Anteil von unter 1 Gew.-% enthalten sind, werden bevorzugt als Vormischung in einer der Komponenten mit einem größeren Anteil zugeführt.

Die Temperaturen, bei denen das erfindungsgemäße Verfahren durchgeführt wird, hängen in erster Linie von den eingesetzten Komponenten ab und sind dem Fachmann bekannt, mit der Maßgabe, dass sie unterhalb der spezifischen Zersetzungstemperaturen der einzelnen eingesetzten Komponenten liegen. Bevorzugt wird das erfindungsgemäße Verfahren bei Temperaturen unterhalb von 250°C, besonders bevorzugt im Bereich von 150 bis 220°C, durchgeführt.

Das erfindungsgemäße Verfahren wird bevorzugt beim Druck der umgebenden Atmosphäre, also zwischen 900 und 1100 hPa, durchgeführt. Es können aber auch höhere Drücke angewendet werden, die insbesondere vom verwendeten Mischaggregat abhängen. So ist der Druck in unterschiedlichen Bereichen der verwendeten Kneter, Mischer oder Extruder beispielsweise deutlich größer als 1000 hPa.

Nach dem Mischprozess der Einzelkomponenten wird bevorzugt die erfindungsgemäße Mischung dann als heiße, hochviskose Schmelze über eine Düse aus dem Reaktor ausgetragen. Dabei wird in einem bevorzugten Verfahren das Material nach dem Austritt mittels eines Kühlmediums abgekühlt und anschließend zerkleinert bzw. granuliert. Hierbei können das Abkühlen des Materials und das Granulieren simultan durch eine Unterwassergranulierung erfolgen oder nacheinander. Als bevorzugte Kühlmedien werden entweder Wasser oder Luft verwendet. Bevorzugte Verfahren zur Granulierung sind dabei Unterwassergranulierung, Granulierung mittels Luftabschlag bzw. Stranggranulierung. Die erhaltenen Granulate haben ein Gewicht von bevorzugt weniger als 0,5 g, besonders bevorzugt weniger als 0,25 g, insbesondere weniger als 0,125 g. Bevorzugt sind die erfindungsgemäß erhaltene Granulate zylinderförmig oder kugelförmig.

Die so erhaltenen Granulate können in einem nachfolgenden Schritt mittels einer weiteren thermoplastischen Verarbeitung zu einem Formkörper, bevorzugt einem Profil, extrudiert werden Dabei werden nach einer bevorzugten Verfahrensweise die erfindungsgemäßen Zusammensetzungen in Form eines Granulates kontinuierlich in einen Kneter oder Extruder nach dem Stand der Technik gefördert, in diesem Kneter oder Extruder durch Temperatureinwirkung erwärmt und plastifiziert und anschließend durch eine Düse gepresst, die die gewünschte Profilform vorgibt. So können hier je nach Auslegung der Düse entweder Vollprofile aber auch Hohlprofile gefertigt werden.

Ein weiterer Gegenstand der Erfindung sind Formkörper hergestellt durch Extrusion der erfindungsgemäßen Mischungen.

In einer bevorzugten Ausführung wird die erfindungsgemäße Mischung direkt über eine passende Düse kontinuierlich als Profil extrudiert, welches dann ebenfalls nach Abkühlen abgelängt bzw. zugeschnitten werden kann.

Bei der Herstellung der erfindungsgemäßen Mischung können Mischer oder Kneter oder Extruder nach dem Stand der Technik verwendet werden.

Die erhaltenen Mischungen sind bevorzugt thermoplastisch, d.h. die Temperatur, bei welcher der Verlustfaktor (G"/G') gemäß DIN EN ISO 6721-2:2008 den Wert von 1 einnimmt, beträgt bevorzugt mindestens 40°C, besonders bevorzugt mindestens 100°C.

Die erhaltenen Mischungen besitzen bevorzugt ein Elastizitätsmodul (nach ISO 527) von größer 1000 MPa, besonders bevorzugt von größer 2000 MPa.

Die erfindungsgemäßen Mischungen zeigen hervorragende Eigenschaften bezüglich Steifigkeit und eine geringe Wasseraufnahme, wodurch die Mischungen vor allem in Außenanwendungen eingesetzt werden können.

Die erfindungsgemäßen Mischungen können überall dort verwendet werden, wo auch bisher sogenannte WPC eingesetzt wurden.

Bevorzugte Anwendungen der erfindungsgemäßen Polymermischungen sind Verwendungen als Bestandteil für Profile im Baubereich oder als Compound für Automobil-Innenraum-Anwendungen.

Die erfindungsgemäßen Mischungen haben den Vorteil, dass sie einfach in der Herstellung sind.

Die erfindungsgemäßen Mischungen haben ferner den Vorteil, dass ihre Wasseraufnahme gering ist.

Die erfindungsgemäßen Mischungen haben den Vorteil, dass durch den Zusatz der siloxanhaltigen Komponente (A) mechanische Eigenschaften, wie z.B. die Schlagzähigkeit, Festigkeit und die Steifigkeit der fertigen Mischung verbessert werden.

Die erfindungsgemäßen Mischungen haben den Vorteil, dass durch den Zusatz der siloxanhaltigen Komponente (A) die Abriebfestigkeit und Kratzfestigkeit der fertigen Mischungen verbessert werden.

Die erfindungsgemäßen Zusammensetzungen (Z) haben den Vorteil, dass bei der direkten Extrusion von 3-dimensionalen Profilen die Oberflächen der erhaltenen Profile deutlich glatter erhalten werden.

Das erfindungsgemäße Verfahren hat den Vorteil, dass selbst bei höheren Gehalten an organischer Faser der mechanische Abrieb der metallischen Misch- bzw. Extruderelemente stark reduziert ist.

In den nachstehend beschriebenen Beispielen beziehen sich alle Viskositätsangaben auf eine Temperatur von 25°C. Sofern nicht anders angegeben, werden die nachstehenden Beispiele bei einem Druck der umgebenden Atmosphäre, also etwa bei 1000 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, sowie bei einer relativen Luftfeuchtigkeit von etwa 50 % durchgeführt. Des Weiteren beziehen sich alle Angaben von Teilen und Prozentsätzen, soweit nichts anderes angegeben ist, auf das Gewicht.

In den Beispielen werden folgende Produkte verwendet:

### Edukte:

**Polymer PE 1:** Polyethylen hoher Dichte, MFI 4 g/10 min, käuflich erhältlich unter der Bezeichnung "BorPure MB7541" bei der Fa. Borealis Polyolefine, A-Linz;
**Polymer PE 2:** Polyethylen hoher Dichte, MFI 0,3 g/10 min, käuflich erhältlich unter der Bezeichnung "BB2581" bei der Fa. Borealis Polyolefine, A-Linz;
**Polymer PP 1:** Polypropylen Homopolymer, käuflich erhältlich unter der Bezeichnung "HC205 TF" bei der Fa. Borealis Polyolefine, A-Linz;
**EVA1:** Ethylenvinylactetat-Copolymer mit einem VinylacetatGehalt von 19 Gew.-%, käuflich erhältlich unter dem Namen "Escorene UL15019CC" bei der Fa. ExxonMobil Chemical Europe, Hermeslaan 2, 1831 Machelen, Belgien;
**EVA2:** Ethylenvinylactetat-Copolymer mit einem VinylacetatGehalt von 28 Gew.-%, käuflich erhältlich unter dem Namen "Escorene UL15028CC" bei der Fa. ExxonMobil Chemical Europe, Hermeslaan 2, 1831 Machelen, Belgien;
**Amin 1:** Dodecylamin, erhältlich unter der Bezeichnung "Armeen 12D" bei der Fa. Nouryon, Stenungsund, Schweden;
**Amin 2:** 1-Aminooctadecane, käuflich erhältlich unter der Bezeichnung Octadecylamine bei der Firma SigmaAldrich;
**Silicon 1:** Ethyloxalamido-propylterminiertes Polydimethylsiloxan der Formel H₅C₂O-CO-CO-NH-C₃H₆-Si(CH₃)₂-[OSi(CH₃)₂]ₙ-OSi(CH₃)₂-C₃H₆-NH-CO-CO-OC₂H₅ mit einem zahlenmittleren Molekulargewicht Mn von 11457 g/mol;

### Silicon 2:

In einem 2 l 3-Hals-Kolben wurden unter Stickstoff-Atmosphäre 1,146 kg (0,1 mol) Silicon 1 vorgelegt und auf 80°C unter Rühren erwärmt. Anschließend wurden 37,1 g Amin 1 (0,2 mol) hinzugegeben, und nach 30 Minuten Rühren wurde durch Anlegen eines Drucks von 200 mbar das entstandene Ethanol abdestilliert. Nach weiteren 30 Minuten Rühren wurde das erhaltene Produkt als Polymerschmelze isoliert.

Man erhielt 1173 g eines Dodecylaminoxamido-propylterminierten Polydimethylsiloxans der Formel H₂₅C₁₂NH-CO-CO-NH-C₃H₆-Si(CH₃)₂-[OSi(CH₃)₂]ₙ-OSi(CH₃)₂-C₃H₆-NH-CO-CO-NHC₁₂H₂₅ mit einem zahlenmittleren Molekulargewicht von 11733 g/mol und einem Schmelzpunkt von 28°C;

### Silicon 3:

In einem 2 l 3-Hals-Kolben wurden unter Stickstoff-Atmosphäre 1,146 kg (0,1 mol) Silicon 1 vorgelegt und auf 80°C unter Rühren erwärmt. Anschließend wurden 53,9 g Amin 2 (0,2 mol) hinzugegeben, und nach 30 Minuten Rühren wurde durch Anlegen eines Drucks von 200 mbar das entstandene Ethanol abdestilliert. Nach weiteren 30 Minuten Rühren wurde das erhaltene Produkt als Polymerschmelze isoliert.

Man erhielt 1184 g eines Octadecylaminoxamido-propylterminierten Polydimethylsiloxans der Formel H₃₇C₁₈NH-CO-CO-NH-C₃H₆-Si(CH₃)₂-[OSi(CH₃)₂]ₙ-OSi(CH₃)₂-C₃H₆-NH-CO-CO-NHC₁₈H₃₇ mit einem zahlenmittleren Molekulargewicht von 11833 g/mol und einem Schmelzpunkt von 46°C;
**Additiv Y1:** Riciunsöl, erhältlich unter der Bezeichnung "Castor Öl" bei der Fa. SigmaAldrich;
**Additiv Y2:** Macrogol-40-glycerolhydroxystearat, ethoxyliertes, hydriertes Rizinusöl, erhältlich unter der Bezeichnung "Emulgin CO40" bei BASF SE, D-Ludwigshafen;
**Additiv Y3:** Siliconöl, erhältlich unter der Bezeichnung "AK 1000" bei der Wacker Chemie AG, D- München;
**Additiv Y4:** Gleitmittelcompound 1, erhältlich unter dem Namen "Struktol TPW 113" bei der Fa. Schill und Seilacher Struktol, D-Hamburg;
**Additiv Y5:** Gleitmittelcompound 2, erhältlich unter dem Namen "Struktol TPW 104" bei der Fa. Schill und Seilacher Struktol, D-Hamburg;
**Faser B1:** Holzfasern (käuflich erhältlich unter der Bezeichnung Lignocell C320 bei der Fa. JRS Rettenmaier & Söhne GmbH und Co. KG, D-Rosenberg);
**Polymer C1:** Maleinsäureanhydrid funktionalisiertes Polyethylen (käuflich erhältlich unter der Bezeichnung "Scona TSPE 2102 GAHD" bei der BYK Kometra GmbH, D-Schkopau);
**Polymer C2:** Maleinsäureanhydrid funktionalisiertes Polypropylen (käuflich erhältlich unter der Bezeichnung "Scona TPPP 8112 FA" bei der BYK Kometra GmbH, D-Schkopau);

### Beispiel 1 (Herstellung von Masterbatch I)

1,50 kg Silicon 2 wurden mit 8,50 kg Polymer EVA1 vermischt und in einem gegenläufigen Zwei-Wellen Extruder ZK 25 der Fa. Collin (D-Ebersberg) bei einer Temperatur von 120°C compoundiert. Dabei betrug die Temperatur im Einzugsbereich (Zone 1) 60°C, wurde in Zone 2 auf 100°C und in Zone 3 auf 120°C gesteigert. Zone 4 und Zone 5 hatten ebenfalls 120°C, und die Düse wurde auf 110°C temperiert. Die Mischung wurde als Strang extrudiert, der anschließend granuliert wurde. Die Austragsgeschwindigkeit betrug 2,2 kg/h. Man erhielt so 9,85 kg Masterbatch I mit einem Gehalt an Silicon 2 von 15 Gew.-% und 85 Gew.-% eines EVA mit einem Gehalt an Vinylacetat von 19 Gew.-%.

### Beispiel 2 (Herstellung von Masterbatch II)

1,50 kg Silicon 2 wurden mit 8,50 kg Polymer EVA2 vermischt und in einem gegenläufigen Zwei-Wellen Extruder ZK 25 der Fa. Collin (D-Ebersberg) bei einer Temperatur von 120°C compoundiert. Dabei betrug die Temperatur im Einzugsbereich (Zone 1) 60°C, wurde in Zone 2 auf 100°C und in Zone 3 auf 120°C gesteigert. Zone 4 und Zone 5 hatten ebenfalls 120°C, und die Düse wurde auf 110°C temperiert. Die Mischung wurde als Strang extrudiert, der anschließend granuliert wurde. Die Austragsgeschwindigkeit betrug 2,2 kg/h. Man erhielt so 9,85 kg Masterbatch II mit einem Gehalt an Silicon 2 von 15 Gew.-% und 85 Gew.-% eines EVA mit einem Gehalt an Vinylacetat von 28 Gew.-%.

### Beispiel 3 (Herstellung von Masterbatch III)

1,50 kg Silicon 2 und 1,5 KG Additiv Y1 wurden mit 7,00 kg Polymer EVA1 vermischt und in einem gegenläufigen Zwei-Wellen Extruder ZK 25 der Fa. Collin (D-Ebersberg) bei einer Temperatur von 120°C compoundiert. Dabei betrug die Temperatur im Einzugsbereich (Zone 1) 60°C, wurde in Zone 2 auf 100°C und in Zone 3 auf 120°C gesteigert. Zone 4 und Zone 5 hatten ebenfalls 120°C, und die Düse wurde auf 110°C temperiert. Die Mischung wurde als Strang extrudiert, der anschließend granuliert wurde. Die Austragsgeschwindigkeit betrug 2,2 kg/h. Man erhielt so 9,85 kg Masterbatch III mit einem Gehalt an Silicon 2 von 15 Gew.-% und 70 Gew.-% eines EVA mit einem Gehalt an Vinylacetat von 19 Gew.- % und 15 Gew.-% eines weiteren externen Gleitmittels Y1.

### Beispiel 4 (Herstellung von Masterbatch IV)

1,50 kg Silicon 2 und 1,50 kg ethoxyliertes Additiv Y2 wurden mit 7,00 kg Polymer EVA2 vermischt und in einem gegenläufigen Zwei-Wellen Extruder ZK 25 der Fa. Collin (D-Ebersberg) bei einer Temperatur von 120°C compoundiert. Dabei betrug die Temperatur im Einzugsbereich (Zone 1) 60°C, wurde in Zone 2 auf 100°C und in Zone 3 auf 120°C gesteigert. Zone 4 und Zone 5 hatten ebenfalls 120°C, und die Düse wurde auf 110°C temperiert. Die Mischung wurde als Strang extrudiert, der anschließend granuliert wurde. Die Austragsgeschwindigkeit betrug 2,2 kg/h. Man erhielt so 9,87 kg Masterbatch IV mit einem Gehalt an Silicon 2 von 15 Gew.-% und 70 Gew.-% eines EVA mit einem Gehalt an Vinylacetat von 28 Gew.-% und 15 % eines weiteren extrenen Gleitmittels Y2.

### Beispiel 5 (Herstellung von Masterbatch V)

3,00 kg Silicon 2 wurden mit 7,00 kg Polymer EVA2 vermischt und in einem gegenläufigen Zwei-Wellen Extruder ZK 25 der Fa. Collin (D-Ebersberg) bei einer Temperatur von 120°C compoundiert. Dabei betrug die Temperatur im Einzugsbereich (Zone 1) 60°C, wurde in Zone 2 auf 100°C und in Zone 3 auf 120°C gesteigert. Zone 4 und Zone 5 hatten ebenfalls 120°C, und die Düse wurde auf 110°C temperiert. Die Mischung wurde als Strang extrudiert, der anschließend granuliert wurde. Die Austragsgeschwindigkeit betrug 2,2 kg/h. Man erhielt so 9,80 kg Masterbatch V mit einem Gehalt an Silicon 2 von 30 Gew.-% und 70 Gew.-% eines EVA mit einem Gehalt an Vinylacetat von 28 Gew.-%.

### Beispiel 6 nicht erfindungsgemäß (Herstellung von Masterbatch VI)

3,00 kg Additiv Y3 wurden mit 7,00 kg Polymer EVA2 vermischt und in einem gegenläufigen Zwei-Wellen Extruder ZK 25 der Fa. Collin (D-Ebersberg) bei einer Temperatur von 120°C compoundiert. Dabei betrug die Temperatur im Einzugsbereich (Zone 1) 60°C, wurde in Zone 2 auf 100°C und in Zone 3 auf 120°C gesteigert. Zone 4 und Zone 5 hatten ebenfalls 120°C, und die Düse wurde auf 110°C temperiert. Die Mischung wurde als Strang extrudiert, der anschließend granuliert wurde. Die Austragsgeschwindigkeit betrug 1,8 kg/h. Man erhielt so 9,65 kg Masterbatch VI mit einem Gehalt an Additiv Y3 von 30 Gew.-% und 70 Gew.-% eines EVA mit einem Gehalt an Vinylacetat von 28 Gew.-%.

### Beispiel 7 (Herstellung von Masterbatch VII)

2,00 kg Silicon 2 und 1,00 kg Additiv Y2 wurden mit 7,00 kg Polymer EVA2 vermischt und in einem gegenläufigen Zwei-Wellen Extruder ZK 25 der Fa. Collin (D-Ebersberg) bei einer Temperatur von 120°C compoundiert. Dabei betrug die Temperatur im Einzugsbereich (Zone 1) 60°C, wurde in Zone 2 auf 100°C und in Zone 3 auf 120°C gesteigert. Zone 4 und Zone 5 hatten ebenfalls 120°C, und die Düse wurde auf 110°C temperiert. Die Mischung wurde als Strang extrudiert, der anschließend granuliert wurde. Die Austragsgeschwindigkeit betrug 2,2 kg/h. Man erhielt so 9,85 kg Masterbatch VII mit einem Gehalt an Silicon 2 von 20 Gew.-%, an Additiv Y2 von 10 Gew.-% und 70 Gew.-% eines EVA mit einem Gehalt an Vinylacetat von 28 Gew.-%.

### Beispiel 8 (Herstellung von Masterbatch VIII)

1,00 kg Silicon 2 und 2,00 kg Additiv Y2 wurden mit 7,00 kg Polymer EVA2 vermischt und in einem gegenläufigen Zwei-Wellen Extruder ZK 25 der Fa. Collin (D-Ebersberg) bei einer Temperatur von 120°C compoundiert. Dabei betrug die Temperatur im Einzugsbereich (Zone 1) 60°C, wurde in Zone 2 auf 100°C und in Zone 3 auf 120°C gesteigert. Zone 4 und Zone 5 hatten ebenfalls 120°C, und die Düse wurde auf 110°C temperiert. Die Mischung wurde als Strang extrudiert, der anschließend granuliert wurde. Die Austragsgeschwindigkeit betrug 2,2 kg/h. Man erhielt so 9,85 kg Masterbatch VIII mit einem Gehalt an Silicon 2 von 10 Gew.-%, Additiv Y2 von 20 Gew.-% und 70 Gew.-% eines EVA mit einem Gehalt an Vinylacetat von 28 Gew.-%.

### Beispiel 9 (Herstellung von Masterbatch IX)

1,0 kg Silicon 3 und 1,0 KG Additiv Y2 wurden mit 4,70 kg Polymer EVA1 vermischt und in einem gegenläufigen Zwei-Wellen Extruder ZK 25 der Fa. Collin (D-Ebersberg) bei einer Temperatur von 120°C compoundiert. Dabei betrug die Temperatur im Einzugsbereich (Zone 1) 60°C, wurde in Zone 2 auf 100°C und in Zone 3 auf 120°C gesteigert. Zone 4 und Zone 5 hatten ebenfalls 120°C, und die Düse wurde auf 110°C temperiert. Die Mischung wurde als Strang extrudiert, der anschließend granuliert wurde. Die Austragsgeschwindigkeit betrug 2,2 kg/h. Man erhielt so 6,55 kg Masterbatch IX mit einem Gehalt an Silicon 3 von 15 Gew.-%, an Additiv Y2 von 15 Gew.-% und 70 % eines EVA mit einem Gehalt an Vinylacetat von 19 Gew. %.

**Tabelle 1:**

| Beispiel | **1** | **2** | **3** | **4** | **5** | **6** | **7** | **8** | **9** |
|---|---|---|---|---|---|---|---|---|---|
| Masterbatch | I | II | III | IV | V | VI | VII | VIII | IX |
| EVA 1 [kg] | 8,5 | | 7,0 | | | | | | 4,7 |
| EVA 2 [kg] | | 8,5 | | 7,0 | 7,0 | 7,0 | 7,0 | 7,0 | |
| Silicon 2 [kg] | 1,5 | 1,5 | 1,5 | 1,5 | 3,0 | | 2,0 | 1,0 | |
| Silicon 3 [kg] | | | | | | | | | 1,0 |
| Additiv Y1 [kg] | | | 1,5 | | | | | | |
| Additiv Y2 [kg] | | | | 1,5 | | | 1,0 | 2,0 | 1,0 |
| Additiv Y3 [kg] | | | | | | 3,0 | | | |
| Summe der Einzelkomponenten [kg] | 10 | 10 | 10 | 10 | 10 | 10 | 10 | 10 | 6,7 |
| Isolierte Granulatmenge [kg] | 9,85 | 9,85 | 9,85 | 9,87 | 9,80 | 9,65 | 9,85 | 9,85 | 6,55 |

Man sieht, dass man durch Kombination entsprechender Träger-Polymer (hier EVA) die Additive entweder alleine oder in Verbindung mit weiteren Additiven in relativ hohen Konzentrationen als Masterbatche (Z) in Granulatform erhalten können.

### Beispiele 10-26

Mit den in Tabelle 2 genannten Komponenten in den dort angegebenen Mengen (jeweils in kg) wurden Holzfaser-Compounds hergestellt. Dabei wurden die angegebenen Komponenten jeweils unabhängig voneinander gravimetrisch in einen gleichläufigen Zwei-Wellenkneter ZSK 26 Mc der Fa. Coperion (Stuttgart, DE) in Zone 1 dosiert. Die Temperatur der Zone 1 betrug dabei 195°C, die Temperatur der Zone 2 betrug 190°C, die Temperatur der Zone 3 betrug 190°C, die Temperatur der Zone 4 betrug 185°C und die Temperatur der Zone 5 betrug ebenfalls 185°C. Die Düsentemperatur betrug 190°C. Die erhaltene Polymerschmelze wurde direkt nach Düsenaustritt mittels einer Anlage zur Unterwassergranulierung der Fa. Econ (Weisskirchen/Traun, AT) bei einer Kühlwassertemperatur von 18°C granuliert. Die Austragsgeschwindigkeit der Polymermischung betrug dabei 15 kg/h.

Beispiel 26 ist dabei ein nicht-erfindungsgemäßes Vergleichsbeispiel zur Veranschaulichung der Herstellung von Holzfaser-Compounds ohne Gleitmittel.

**Tabelle 2:**

| Beispiel | **10** | **11** | **12** | **13** | **14** | **15** | **16** | **17** | **18** |
|---|---|---|---|---|---|---|---|---|---|
| Masterbatch IV | | | 2 | | | | | | |
| Masterbatch V | 0,5 | 0,5 | | | | | | | |
| Masterbatch VI | | 2 | | | | | | | |
| Masterbatch VII | | | | 1,5 | 2,0 | 2,5 | 0,75 | 1,0 | 1,25 |
| Masterbatch VIII | | | | | | | 0,75 | 1,0 | 1,25 |
| Polymer PE1 | 39,5 | 37,5 | 38,0 | 37,5 | 37,0 | 36,5 | 37,5 | 37,0 | 36,5 |
| Faser B1 | 60 | 60 | 60 | 60 | 60 | 60 | 60 | 60 | 60 |
| Polymer C1 | | | | 1,0 | 1,0 | 1,0 | 1,0 | 1,0 | 1,0 |
| Summe der Einzelkomponenten | 100 | 100 | 100 | 100 | 100 | 100 | 100 | 100 | 100 |
| Isolierte Granulatmenge [kg] | 87 | 89 | 91 | 93 | 91 | 94 | 92 | 96 | 92 |

**Tabelle 3:**

| Beispiel | **19** | **20** | **21** | **22** | **23** | **24** | **25** | **26** |
|---|---|---|---|---|---|---|---|---|
| Masterbatch III | | | | 1,5 | 2,0 | 2,5 | | |
| Masterbatch IV | | | | | | | | |
| Masterbatch V | | | | | | | | |
| Masterbatch VI | | | | | | | | |
| Masterbatch VII | | | | | | | | |
| Masterbatch VIII | 1,5 | 2,0 | 2,5 | | | | | |
| Masterbatch IX | | | | | | | 2,0 | |
| Polymer PE1 | 37,5 | 37,0 | 36,5 | 37,5 | 37,0 | 36,5 | 37,0 | 39 |
| Faser B1 | 60 | 60 | 60 | 60 | 60 | 60 | 60 | 60 |
| Polymer C1 | 1 | 1 | 1 | 1 | 1 | 1 | 1 | 1 |
| Summe der Einzelkomponenten | 100 | 100 | 100 | 100 | 100 | 100 | 100 | 100 |
| Isolierte Granulatmenge [kg) | 91 | 89 | 93 | 90 | 94 | 93 | 94 | 95 |

### Beispiele 27-43

Die in den Beispielen 10-26 erhaltenen Polymermischungen wurden auf einem gegenläufigen Doppelschneckenextruder (Battenfeld Cincinnati Austria, Fiberex K38) mit 20 kg/h gravimetrisch in Zone 1 dosiert. Die Temperatur der Zone 1 betrug dabei 195°C, die Temperatur der Zone 2 betrug 170°C, die Temperatur der Zone 3 betrug 180°C, die Temperatur der Zone 4 betrug 180°C und die Temperatur der Zone 5 betrug ebenfalls 180°C. Die Düsentemperatur betrug 190°C. Die Extruderdrehzahl betrug 20 U/min. Die Massetemperatur betrug dabei jeweils ca. 190°C. Die erhaltene Polymerschmelze wurde nach Düsenaustritt als Profil mit einer Breite von 80 mm und einer Höhe von 25 mm extrudiert, mittels eines Kühlbandes auf 32°C abgekühlt und zugeschnitten.

Das Beispiel 43 ist ein nicht-erfindungsgemäßes Vergleichsbeispiel.

**Tabelle 4:**

| Beispiel | 27 | 28 | 29 | 30 | 31 | 32 | 33 | 34 | 35 |
|---|---|---|---|---|---|---|---|---|---|
| Compound aus Beispiel | 10 | 11 | 12 | 13 | 14 | 15 | 16 | 17 | 18 |

| Extrusionsparameter | | | | | | | | | |
|---|---|---|---|---|---|---|---|---|---|
| Spez. Leistung [Wh/kg] (Ziel < 140 Wh/kg) | 128 | 111 | 112 | 137 | 135 | 135,5 | 137 | 136, 5 | 135 |
| Belastung Extruder [%] | 36 | 31,5 | 32 | 39,0 | 39,0 | 39,0 | 39,0 | 38,5 | 38,5 |
| Massetemperatur in °C | 178 | 175 | 177 | 178 | 178 | 178 | 175 | 176 | 175 |
| Massedruck [MPa] | 77 | 100 | 85 | 86 | 89 | 89 | 89 | 89 | 85 |

| Mechanik | | | | | | | | | |
|---|---|---|---|---|---|---|---|---|---|
| Dichte [g/cm³] | 1,12 | 1,02 | 1,14 | 1,15 | 1,16 | 1,16 | 1,16 | 1,16 | 1,16 |
| Biege E-Modul [MPa] | 2862 | 1587 | 1960 | 2992 | 3477 | 3359 | 3535 | 3524 | 3416 |
| Biegefestigkeit [MPa] | 28,32 | 13,91 | 16,88 | 30,45 | 36,65 | 35,85 | 37,75 | 34,11 | 22,93 |
| Schlagzähigkeit [N/mm²] | n.b. | 4,17 | 5,21 | n.b. | n.b. | n.b. | n.b. | n.b. | n.b. |
| Wasseraufnahme nach 7 Tagen Lagerung | n.b. | | | 8,24 | 6,88 | 7,12 | 6,27 | 7,44 | 7,36 |
| Wasseraufnahme nach | n.b. | 30,74 | 21,49 | | | | | | |
| 28 Tagen Lagerung [%] (Ziel ≤ 15 %) | | | | | | | | | |
| Optische Beurteilung | 4 | 3 | 3 | 2 | 1 | 1 | 1 | 1 | 2 |

**Tabelle 5:**

| Beispiel | 36 | 37 | 38 | 39 | 40 | 41 | 42 | 43 |
|---|---|---|---|---|---|---|---|---|
| Compound aus Beispiel | 19 | 20 | 21 | 22 | 23 | 24 | 25 | 26 |

| Extrusionsparameter | | | | | | | | |
|---|---|---|---|---|---|---|---|---|
| Spez. Leistung [Wh/kg] (Ziel < 140 Wh/kg) | 139,00 | 136,00 | 138,50 | 140,50 | 135,00 | 136, 00 | 135,0 | 158,0 |
| Belastung Extruder [%] | 39,50 | 39,00 | 40,00 | 39,50 | 38,00 | 38,50 | 39,0 | 44,0 |
| Massetemperatur in °C | 174 | 174,5 | 174,7 | 174,5 | 174,4 | 174,2 | 176,7 | 178,3 |
| Massedruck [MPa] | 92 | 88,5 | 98 | 88 | 85,5 | 89 | 86 | 102 |

| Mechanik | | | | | | | | |
|---|---|---|---|---|---|---|---|---|
| Dichte [g/cm3] | 1,15 | 1,15 | 1,15 | 1,15 | 1,15 | 1,15 | 1,16 | 1,15 |
| Biege E-Modul [MPa] | 3481 | 3148 | 3245 | 3140 | 3210 | 3180 | 3358 | 3653 |
| Biegefestigkeit [MPa] | 34 | 32,53 | 33,21 | 31,29 | 32,80 | 33,10 | 35,80 | 36,2 |
| Schlagzähigkeit [N/mm²] | n.b. | n.b. | n.b. | n.b. | n.b. | n.b. | n.b. | n.b. |
| Wasseraufnahme nach 7 Tagen Lagerung [%] | 7,15 | 7,69 | 7,72 | 7,66 | 7,54 | 7,70 | 7,10 | 6,21 |
| Optische Beurteilung | 2 | 2 | 1 | 2 | 2 | 1 | 1 | 5 |

Ohne die Verwendung von Gleitmittel-Compounds (z.B. nicht erfindungsgemäßes Beispiel 43) benötigt man deutlich höhere Extrusionsleistungen und v.a. die Dimensionsstabilität des extrudierten Profiles ist v.a. wegen des Aufreißens des Profiles an den Kanten mangelhaft was zu einer mangelhaften optischen Beurteilung führt.

### Beispiele 44-52

Mit den in Tabelle 6 genannten Komponenten in den dort angegebenen Mengen (jeweils in kg) wurden Holzfaser-Compounds hergestellt. Dabei wurden die angegebenen Komponenten jeweils unabhängig voneinander gravimetrisch in einen gleichläufigen Zwei-Wellenkneter ZSK 26 Mc der Fa. Coperion (Stuttgart, DE) in Zone 1 dosiert. Die Temperatur der Zone 1 betrug dabei 195°C, die Temperatur der Zone 2 betrug 190°C, die Temperatur der Zone 3 betrug 190°C, die Temperatur der Zone 4 betrug 185°C und die Temperatur der Zone 5 betrug ebenfalls 185°C. Die Düsentemperatur betrug 190°C. Die erhaltene Polymerschmelze wurde direkt nach Düsenaustritt als farbiges Profil mit einer Breite von 80 mm und einer Höhe von 25 mm extrudiert, mittels eines Kühlbandes auf auf 32°C abgekühlt und zugeschnitten. Die Austragsleistung betrug 20 kg/h. Dabei sind die Beispiele 44-46 als Vergleichsbeispiele anzusehen und nicht erfindungsgemäß.

**Tabelle 6:**

| Beispiel | **44** | **45** | **46** | **47** | **48** | **49** | **50** | **51** | **52** |
|---|---|---|---|---|---|---|---|---|---|
| Masterbatch IV | | | | 1,5 | 2,0 | 1,5 | 2,0 | 1,5 | 2,0 |
| Additiv Y4 | | 3,0 | | | | | | | |
| Additiv Y5 | | | 4,0 | | | | | | |
| Polymer PE1 | 40 | 35,0 | 34,0 | 36,5 | 36,0 | | | | |
| Polymer PE2 | | | | | | 36,5 | 36,0 | 37,5 | 37,0 |
| Polymer C1 | | 2,0 | 2,0 | 2,0 | 2,0 | 2,0 | 2,0 | 1,0 | 1,0 |
| Faser B1 | 60 | 60 | 60 | 60 | 60 | 60 | 60 | 60 | 60 |
| Summe der Einzelkomponenten | 100 | 100 | 100 | 100 | 100 | 100 | 100 | 100 | 100 |

| Extrusionsparameter | | | | | | | | | |
|---|---|---|---|---|---|---|---|---|---|
| Spez. Leistung [Wh/kg] | 146, 5 | 131, 00 | 137, 00 | 135, 00 | 135, 50 | 137, 00 | 136, 50 | 135, 00 | 139, 00 |
| Belastung Extruder [%] | 41,5 | 37,5 | 39,0 | 39,5 | 38,5 | 39,0 | 38,5 | 38,5 | 39,5 |
| Massetemperatur in °C | 176 | 176 | 178 | 178 | 178 | 176 | 175 | 176 | 174 |

| Mechanik | | | | | | | | | |
|---|---|---|---|---|---|---|---|---|---|
| Dichte | 1,13 | 1,12 | 1,15 | 1,16 | n.b. | 1,16 | 1,16 | 1,16 | 1,15 |
| Biege E-Modul [MPa] | n.b. | 2506 | 2992 | 3477 | n.b. | 3535 | 3524 | 3416 | 3481 |
| Biegefestigkeit [MPa] | n.b. | 19, 7 6 | 30,4 5 | 36,6 5 | n.b. | 37,7 5 | 34,1 1 | 22,9 3 | 34 |
| Wasseraufnahme nach 7 Tagen Lagerung | n.b. | 10,9 8 | 8,24 | 6, 88 | n.b. | 6,27 | 7,44 | 7,36 | 7,15 |
| Optische Beurteilung der Profile | 5 | 2 | 2 | 2 | 1 | 1 | 2 | 2 | 2 |

Die Mischungen der erfindungsgemäßen Beispiele 47 bis 52 sind die Polymer/Naturfaser-Compounds, die eine starke Absenkung der Leistungsaufnahme während der Extrusion mit einer gleichzeitigen Beibehaltung der niedrigen Wasseraufnahme mit sehr guten mechanischen Kennwerten kombiniert sowie eine gute bis sehr gute Profiloberfläche zeigen.

### Beispiele 53-55

Mit den in Tabelle 7 genannten Komponenten in den dort angegebenen Mengen (jeweils in kg) wurden Holzfaser-Compounds hergestellt. Dabei wurden die angegebenen Komponenten jeweils unabhängig voneinander gravimetrisch in einen gleichläufigen Zwei-Wellenkneter ZSK 26 Mc der Fa. Coperion (Stuttgart, DE) in Zone 1 dosiert. Die Temperatur der Zone 1 betrug dabei 220°C, die Temperatur der Zone 2 betrug 190°C, die Temperatur der Zone 3 betrug 180°C, die Temperatur der Zone 4 betrug 180°C und die Temperatur der Zone 5 betrug ebenfalls 180°C. Die Düsentemperatur betrug 180°C. Die erhaltene Polymerschmelze wurde direkt nach Düsenaustritt als farbiges Profil mit einer Breite von 80 mm und einer Höhe von 25 mm extrudiert, mittels eines Kühlbandes auf auf 32°C abgekühlt und zugeschnitten. Die Austragsleistung betrug 20 kg/h. Dabei ist das Beispiel 53 in dem keine Gleitmitteladditive verwendet werden als Vergleichsbeispiel anzusehen und nicht erfindungsgemäß.

**Tabelle 7:**

| Beispiel | **53** | **54** | **55** |
|---|---|---|---|
| Masterbatch IV | | 1,0 | 1,5 |
| Polymer PP1 | 38 | 37,0 | 36,5 |
| Polymer C2 | 2,0 | 2,0 | 2,0 |
| Faser B1 | 60 | 60 | 60 |
| Summe der Einzelkomponenten | 100 | 100 | 100 |

| Extrusionsparameter | | | |
|---|---|---|---|
| Spez. Leistung [Wh/kg] | 153,5 | 135,00 | 136,00 |
| Belastung Extruder [%] | 48 | 42 | 43 |
| Massetemperatur in °C | 185 | 182 | 180 |

| Mechanik | | | |
|---|---|---|---|
| Biege E-Modul [MPa] | 4410 | 3451 | 4325 |
| Biegefestigkeit [MPa] | 53,2 | 38,9 | 52,1 |
| Wasseraufnahme nach 7 Tagen Lagerung | 2,8 | 3,9 | 3,1 |
| Optische Beurteilung der Profile | 5 | 2 | 1 |

Man sieht, dass auch hier der Masterbatch IV zu einer Verbesserung der Extrusionseigenschaften führt, bei gleichzeitiger Bewahrung guter mechanischer Eigenschaften sowie einer sehr guten optischen Profilqualität.

Die Biegeeigenschaften wurden jeweils gemäß der EN ISO 178 bestimmt. Die Prüfgeschwindigkeit betrug 3 mm/min, die Anzahl der gemessenen Proben waren 6, die Probengröße betrug 80mm x 10mm x 4 mm.

Die Charpy Schlagzähigkeit (ungekerbt)wurde gemäß EN ISO 179 bestimmt. Das Schlagpendel hatte eine Schlagenergie von 0,5 J. Die Anzahl der gemessenen Proben war 10. Die Probengröße war 80mm × 10 mm × 4 mm.

Zur Bestimmung der Wasseraufnahme wurden jeweils 2 Proben mit einer Abmessung von 50 mm x 50 mm x 4 mm bei einer Temperatur von 20 ± 2°C und einer Eintauchzeit von 7 Tagen oder 28 Tagen in VE-Wasser so gelagert, dass diese vom Wasser komplett umschlossen waren. Vor dem Start der Wasserlagerung wurden die Proben in einem Trockenschrank jeweils bei 80°C 72 h lang getrocknet. Nach der oben angeführten Eintauchzeit werden die Proben aus dem Wasserbad genommen und das Wasser auf der Oberfläche abgetupft. Die Berechnung der Wasseraufnahme erfolgt durch Bildung des Quotienten aus der Gewichtszunahme nach Wasserlagerung und dem Originalgewicht vor Wasserlagerung.

Die optische Beurteilung der hergestellten Profile beruht dabei auf einem 6 - stufigen System: 1 = sehr gut; 2 = gut; 3 = befriedigend; 4 = ausreichend, 5 = mangelhaft, 6 = ungenügend. Bei der Beurteilung wurde dabei die Welligkeit der hergestellten profile sowie die oberflächenrauhigkeit und die Kantenpräzission mit in Betracht gezogen.

## Patentansprüche

1. Mischungen enthaltend
(A) Organosiliciumverbindungen der allgemeinen Formel
R_{3-a-b}(OR¹)ₐR²_{b}S1[OSiR₂]ₚ[OSiRR²]_{q}[OSiR²₂]ᵣOSiR_{3-a-b}(OR¹)ₐR²_{b} (I),
wobei
R gleich oder verschieden sein kann und einen einwertigen, gegebenenfalls substituierten, SiC-gebundenen Kohlenwasserstoffrest bedeutet,
**R¹** gleich oder verschieden sein kann und Wasserstoffatom oder einen einwertigen, gegebenenfalls substituierten Kohlenwasserstoffrest bedeutet,
**R²** eine SiC-gebundene Einheit der allgemeinen Formel
R³-X-[CO-(CO)ₙ]-X-R⁴- (II)
bedeutet, worin
**X** gleich oder verschieden sein kann und -O- oder -NR^{x}- ist,
**R³** gleich oder verschieden sein kann und monovalente, gegebenenfalls substituierte Kohlenwasserstoffreste mit mindestens 6 Kohlenstoffatomen bedeutet,
**R⁴** bivalente, gegebenenfalls substituierte Kohlenwasserstoffreste mit 1 bis 40 Kohlenstoffatomen, wobei einzelne Kohlenstoffatome durch Sauerstoffatome oder -NR^{z}- ersetzt sein können, bedeutet,
**R^{x}** gleich oder verschieden sein kann und Wasserstoffatom oder monovalente, gegebenenfalls substituierte Kohlenwasserstoffreste mit 1 bis 20 Kohlenstoffatomen bedeutet, wobei einzelne Kohlenstoffatome durch Sauerstoffatome ersetzt sein können,
**R^{z}** gleich oder verschieden sein kann und Wasserstoffatom oder monovalente, gegebenenfalls substituierte Kohlenwasserstoffreste mit 1 bis 20 Kohlenstoffatomen bedeutet, wobei einzelne Kohlenstoffatome durch Sauerstoffatome ersetzt sein können,
**n** 0 oder 1 ist,
**a** 0, 1, 2 oder 3 ist,
**b** 0 oder 1 ist,
**p** eine ganze Zahl von 1 bis 1000 ist,
**q** 0 oder eine ganze Zahl von 1 bis 100 ist und
**r** 0 oder eine ganze Zahl von 1 bis 100,
mit der Maßgabe, dass a+b ≤ 3 ist und mindestens ein Rest R² vorhanden ist,
(B) organische Fasern,
(C) thermoplastische Polymere und
gegebenenfalls
(D) mit Carbonsäureanhydrid-Gruppen substituierte Polyolefine.

2. Mischungen gemäß Anspruch 1, **dadurch gekennzeichnet, dass** die Organosiliciumverbindungen der Formel (I) ein zahlenmittleres Molekulargewicht Mn von 1000 g/mol bis 35 000 g/mol haben, wobei Mn mittels SEC, wie in der Beschreibung offenbart, bestimmt wird.

3. Mischungen gemäß Anspruch 1 oder 2, **dadurch gekennzeichnet, dass** der Anteil der Organosiliciumverbindungen (A) in der Mischung zwischen 100 Gew.-ppm und 20000 Gew.-ppm beträgt.

4. Mischungen gemäß einem oder mehreren der Ansprüche 1 bis 3, **dadurch gekennzeichnet, dass** es sich bei Komponente (C) um Polyethylen höherer Dichte (HDPE), um Polypropylen, um Ethylen-Vinylacetat-Copolymere (EVA) oder deren Mischungen handelt.

5. Mischungen gemäß einem oder mehreren der Ansprüche 1 bis 4, **dadurch gekennzeichnet, dass** es sich bei Komponente (B) um Holz handelt.

6. Mischungen gemäß einem oder mehreren der Ansprüche 1 bis 5, **dadurch gekennzeichnet, dass** der Anteil der organischen Fasern (B) in der Mischung zwischen 30 und 90 Gew.-% beträgt.

7. Mischungen gemäß einem oder mehreren der Ansprüche 1 bis 6, **dadurch gekennzeichnet, dass** es sich bei den Mischungen um solche enthaltend
(A) Organosiliciumverbindungen der Formel (I),
(B) organische Fasern,
(C) thermoplastische Polymere,
gegebenenfalls (D) mit Carbonsäureanhydrid-Gruppen substituierte Polyolefine,
gegebenenfalls (E) Flammschutzmittel,
gegebenenfalls (F) Biozide,
gegebenenfalls (G) Pigmente,
gegebenenfalls (H) UV-Absorber,
gegebenenfalls (I) HALS-Stabilisatoren,
gegebenenfalls (J) anorganische Fasern,
gegebenenfalls (K) Gleitmittel und
gegebenenfalls Haftvermittler (L)
handelt.

8. Verfahren zu Herstellung der Mischungen gemäß einem oder mehreren der Ansprüche 1 bis 7 durch Vermischen der einzelnen Komponenten in beliebiger Reihenfolge.

9. Zusammensetzungen (Z) enthaltend
(A) mindestens eine Organosiliciumverbindung der allgemeinen Formel (I),
(C1) thermoplastische Polymere, ausgewählt aus der Gruppe bestehend aus Ethylen-Vinylacetat-Copolymeren und Ethylen-Alkylacrylat-Copolymeren, und
gegebenenfalls (Y) Additive.

10. Verfahren zu Herstellung der Zusammensetzungen (Z) gemäß Anspruch 9 durch Vermischen der einzelnen Komponenten in beliebiger Reihenfolge.

11. Verfahren nach Anspruch 8, **dadurch gekennzeichnet, dass** Zusammensetzung (Z) gemäß Anspruch 9 oder hergestellt gemäß Anspruch 10 mit der Komponente (B), der Komponente (C) sowie gegebenenfalls einer oder mehrerer der Komponenten (D) bis (L) vermischt wird.

12. Formkörper hergestellt durch Extrusion der Mischungen gemäß einem oder mehreren der Ansprüche 1 bis 7 oder hergestellt nach Anspruch 8 oder Anspruch 11.

## Claims

1. Mixtures comprising
(A) organosilicon compounds of the general formula
R_{3-a-b}(OR¹)ₐR²_{b}Si[OSiR₂]ₚ[OSiRR²]_{q}[OSiR²₂]ᵣOSiR_{3-a-b}(OR¹)ₐR²_{b} (I),
wherein
**R** may be identical or different and is a monovalent, optionally substituted, SiC-bonded hydrocarbon radical,
**R¹** may be identical or different and is a hydrogen atom or a monovalent, optionally substituted hydrocarbon radical,
**R²** is a SiC-bonded unit of the general formula
R³-X-[CO-(CO)ₙ]-X-R⁴- (II)
where
**X** may be identical or different and is -O- or -NR^{x}-,
**R³** may be identical or different and denotes monovalent, optionally substituted hydrocarbon radicals having at least 6 carbon atoms,
**R⁴** are divalent, optionally substituted hydrocarbon radicals having 1 to 40 carbon atoms, wherein individual carbon atoms may be replaced by oxygen atoms or -NR^{z}-,
**R^{x}** may be identical or different and is a hydrogen atom or monovalent, optionally substituted hydrocarbon radicals having 1 to 20 carbon atoms, wherein individual carbon atoms may be replaced by oxygen atoms,
**R^{z}** may be identical or different and is a hydrogen atom or monovalent, optionally substituted hydrocarbon radicals having 1 to 20 carbon atoms, wherein individual carbon atoms may be replaced by oxygen atoms,
**n** is 0 or 1,
**a** is 0, 1, 2 or 3,
**b** is 0 or 1,
**p** is an integer from 1 to 1000,
**q** is 0 or an integer from 1 to 100 and
**r** is 0 or an integer from 1 to 100,
with the proviso that a+b is ≤ 3 and at least one R² radical is present,
(B) organic fibres,
(C) thermoplastic polymers and
optionally
(D) polyolefins substituted by carboxylic acid anhydride groups.

2. Mixtures according to Claim 1, **characterized in that** the organosilicon compounds of the formula (I) have a number-average molecular weight Mn of 1000 g/mol to 35 000 g/mol, where Mn is determined by SEC, as disclosed in the description.

3. Mixtures according to Claim 1 or 2, **characterized in that** the proportion of the organosilicon compounds (A) in the mixture is between 100 ppm by weight and 20 000 ppm by weight.

4. Mixtures according to one or more of Claims 1 to 3, **characterized in that** component (C) is high-density polyethylene (HDPE), polypropylene, ethylene-vinyl acetate copolymers (EVA) or mixtures thereof.

5. Mixtures according to one or more of Claims 1 to 4, **characterized in that** component (B) is wood.

6. Mixtures according to one or more of Claims 1 to 5, **characterized in that** the proportion of organic fibres (B) in the mixture is between 30 and 90% by weight.

7. Mixtures according to one or more of Claims 1 to 6, **characterized in that** the mixtures are those comprising
(A) organosilicon compounds of the formula (I),
(B) organic fibres,
(C) thermoplastic polymers,
optionally (D) polyolefins substituted by carboxylic acid anhydride groups,
optionally (E) flame retardants,
optionally (F) biocides,
optionally (G) pigments,
optionally (H) UV absorbers,
optionally (I) HALS stabilizers,
optionally (J) inorganic fibres,
optionally (K) lubricants and
optionally adhesion promoters (L).

8. Process for producing the mixtures according to one or more of Claims 1 to 7 by mixing the individual components in any sequence.

9. Compositions (Z) comprising
(A) at least one organosilicon compound of the general formula (I),
(C1) thermoplastic polymers selected from the group consisting of ethylene-vinyl acetate copolymers and ethylene-alkyl acrylate copolymers, and
optionally (Y) additives.

10. Process for producing the compositions (Z) according to Claim 9 by mixing the individual components in any desired sequence.

11. Process according to Claim 8, **characterized in that** composition (Z) according to Claim 9 or produced according to Claim 10 is mixed with component (B), component (C) and optionally one or more of components (D) to (L).

12. Shaped body produced by extrusion of the mixtures according to one or more of Claims 1 to 7 or produced according to Claim 8 or claim 11.

## Revendications

1. Mélanges contenant
(A) des composés organosiliciés de formule générale
R_{3-a-b}(OR¹)ₐR²_{b}Si[OSiR₂]ₚ[OSiRR²]_{q}[OSiR²₂]ᵣOSiR_{3-a-b}(OR¹)ₐR²_{b} (I),
dans laquelle
R peut être identique ou différent et signifie un radical hydrocarboné monovalent, lié par SiC, le cas échéant substitué,
R¹ peut être identique ou différent et signifie un atome d'hydrogène ou un radical hydrocarboné monovalent, le cas échéant substitué,
R² signifie un motif lié par SiC de formule générale
R³-X-[CO-(CO)ₙ]-X-R⁴- (II)
dans laquelle
X peut être identique ou différent et représente -O-ou -NR^{x}-
R³ peut être identique ou différent et signifie des radicaux hydrocarbonés monovalents, le cas échéant substitués, comprenant au moins 6 atomes de carbone,
R⁴ signifie des radicaux hydrocarbonés bivalents, le cas échéant substitués, comprenant 1 à 40 atomes de carbone, des atomes de carbone individuels pouvant être remplacés par des atomes d'oxygène ou -NR^{z}-,
R^{x} peut être identique ou différent et signifie un atome d'hydrogène ou des radicaux hydrocarbonés monovalents, le cas échéant substitués, comprenant 1 à 20 atomes de carbone, des atomes de carbone individuels pouvant être remplacés par des atomes d'oxygène,
R^{z} peut être identique ou différent et signifie un atome d'hydrogène ou des radicaux hydrocarbonés monovalents, le cas échéant substitués, comprenant 1 à 20 atomes de carbone, des atomes de carbone individuels pouvant être remplacés par des atomes d'oxygène,
n représente 0 ou 1,
a représente 0, 1, 2 ou 3,
b représente 0 ou 1,
p représente un nombre entier de 1 à 1000,
q représente 0 ou un nombre entier de 1 à 100 et
r représente 0 ou un nombre entier de 1 à 100,
à condition que a + b ≤ 3 et qu'au moins un radical R² soit présent,
(B) des fibres organiques,
(C) des polymères thermoplastiques et le cas échéant
(D) des polyoléfines substituées par des groupes anhydride d'acide carboxylique.

2. Mélanges selon la revendication 1, **caractérisés en ce que** les composés organosiliciés de formule (I) présentent un poids moléculaire moyen en nombre Mn de 1000 g/mole à 35 000 g/mole, Mn étant déterminé par SEC (chromatographie par exclusion de taille), comme divulgué dans la description.

3. Mélanges selon la revendication 1 ou 2, **caractérisés en ce que** la proportion de composés organosiliciés (A) dans le mélange est située entre 100 ppm en poids et 20 000 ppm en poids.

4. Mélanges selon l'une ou plusieurs des revendications 1 à 3, **caractérisés en ce qu'**il s'agit, pour le composant (C), de polyéthylène haute densité (HDPE), de polypropylène, de copolymères d'éthylène-acétate de vinyle (EVA) ou de leurs mélanges.

5. Mélanges selon l'une ou plusieurs des revendications 1 à 4, **caractérisés en ce qu'**il s'agit, pour le composant B), de bois.

6. Mélanges selon l'une ou plusieurs des revendications 1 à 5, **caractérisés en ce que** la proportion de fibres organiques (B) dans le mélange est située entre 30 et 90% en poids.

7. Mélanges selon l'une ou plusieurs des revendications 1 à 6, **caractérisés en ce qu'**il s'agit, pour les mélanges, de ceux contenant
(A) des composés organosiliciés de formule (I),
(B) des fibres organiques,
(C) des polymères thermoplastiques
le cas échéant (D) des polyoléfines substituées par des groupes anhydride d'acide carboxylique,
le cas échéant (E) des agents ignifuges,
le cas échéant (F) des biocides,
le cas échéant (G) des pigments,
le cas échéant (H) des absorbants des UV,
le cas échéant (I) des stabilisants de type HALS,
le cas échéant (J) des fibres inorganiques,
le cas échéant (K) des lubrifiants et
le cas échéant (L) des promoteurs d'adhérence.

8. Procédé pour la préparation des mélanges selon l'une ou plusieurs des revendications 1 à 7, par mélange des différents composants dans un ordre quelconque.

9. Compositions (Z) contenant
(A) au moins un composé organosilicié de formule générale (I),
(C1) des polymères thermoplastiques choisis dans le groupe constitué par les copolymères d'éthylèneacétate de vinyle et les copolymères d'éthylèneacrylate d'alkyle et
le cas échéant (Y) des additifs.

10. Procédé pour la préparation des compositions (Z) selon la revendication 9 par mélange des différents composants dans un ordre quelconque.

11. Procédé selon la revendication 8, **caractérisé en ce que** la composition (Z) selon la revendication 9 ou préparée selon la revendication 10 est mélangée avec le composant (B), le composant (C) et le cas échéant un ou plusieurs des composants (D) à (L).

12. Corps façonnés, fabriqués par extrusion des mélanges selon l'une ou plusieurs des revendications 1 à 7 ou préparés selon la revendication 8 ou la revendication 11.
